# EUROPEAN PATENT APPLICATION

(11) **EP 4 708 454 A1**
(43) Date of publication of application: **11.03.2026**
(21) Application number: 24814357.0
(22) Date of filing: 24.05.2024
(51) Int. Cl.: H01M 10/613, H01M 50/258, H01M 50/209, H01M 10/655, H01M 10/6556, H01M 50/244

(54) **BATTERY MODULE, BATTERY PACK, AND ELECTRIC DEVICE**

(30) Priority: 26.05.2023 CN 202310613230
(71) Applicant: Xiamen Ampack Technology Limited, Xiamen City, Fujian Province, 361000 (CN)
(72) Inventor: PENG, Fanggui, Xiamen City, Fujian Province 361000 (CN); NONG, Wenbin, Xiamen City, Fujian Province 361000 (CN); LI, Tingyong, Xiamen City, Fujian Province 361000 (CN)
(74) Representative: Icosa
(86) International application number: PCT/CN2024/095314
(87) International publication number: WO 2024/245160

(57) **Abstract**

This application discloses a battery module, a battery pack, and an electrical device. The battery module comprises a shell, a cell assembly, and a first heat dissipation element. The cell assembly is disposed in the shell. The cell assembly includes a plurality of battery cells. Each battery cell includes a cell housing and electrode terminals extends out of the cell housing. The first heat dissipation element is provided with a first heat dissipation channel. The first heat dissipation channel communicates with the outside. The first heat dissipation element is provided with a first heat dissipation recess. The first heat dissipation recess accommodates at least one cell housing. A part of each cell housing is disposed in the first heat dissipation recess. In this application, by disposing the first heat dissipation recess on the first heat dissipation element and disposing a part of the cell housing in the first heat dissipation recess, the heat of a battery cell can be directly conducted to the first heat dissipation element. The heat is taken away through the first heat dissipation channel, thereby shortening the heat dissipation path. The first heat dissipation recess can increase the heat dissipation area of the first heat dissipation element, thereby improving the heat dissipation efficiency, simplifying the structure of the battery module, and facilitating assembling.

## Description

### TECHNICAL FIELD

This application relates to the technical field of energy storage, and in particular, to a battery module, a battery pack, and an electrical device.

### BACKGROUND

Battery modules are now widely used in unmanned aerial vehicles, electric vehicles, smart energy storage devices, and other fields. A battery module generates a lot of heat during operation. To prevent overheating of the battery module, the heat of the battery module needs to be dissipated. A conventional heat dissipation method is to add an aluminum heat dissipation element between battery cells. However, the added heat dissipation elements complicate the structure of the battery module and are adverse to assembling.

### SUMMARY

In view of the above situation, it is necessary to provide a battery module, a battery pack, and an electrical device to improve heat dissipation efficiency, simplify the structure of the battery module, and facilitate assembling.

An embodiment of this application provides a battery module. The battery module includes a shell, a cell assembly, and a first heat dissipation element.

The cell assembly is disposed in the shell. The cell assembly includes a plurality of battery cells. Each battery cell includes a cell housing and electrode terminals extending out of the cell housing. The first heat dissipation element is provided with a first heat dissipation channel. The first heat dissipation channel communicates with the outside. The first heat dissipation element is provided with a first heat dissipation recess. The first heat dissipation recess accommodates the cell housing of at least one of the plurality of battery cells. A part of each cell housing of each battery cell is disposed in the first heat dissipation recess. In this application, by disposing the first heat dissipation recess on the first heat dissipation element and disposing a part of the cell housing in the first heat dissipation recess, the heat of a battery cell can be directly conducted to the first heat dissipation element. The heat is taken away through the first heat dissipation channel, thereby shortening the heat dissipation path. The first heat dissipation recess can increase the heat dissipation area of the first heat dissipation element, thereby improving the heat dissipation efficiency, simplifying the structure of the battery module, and facilitating assembling.

Optionally, in some embodiments of this application, the first heat dissipation element is provided with a plurality of first heat dissipation recesses. Each first heat dissipation recess accommodates a part of one cell housing, thereby improving the heat dissipation efficiency.

Optionally, in some embodiments of this application, each battery cell includes an electrode assembly. The cell housing includes a main portion and a first sealing portion. The electrode assembly is disposed in the main portion. The electrode terminals extend out of the cell housing from the first sealing portion. A part of the main portion and a part of the first sealing portion are disposed in the first heat dissipation recess, thereby improving the heat dissipation efficiency.

Optionally, in some embodiments of this application, the cell housing further includes a second sealing portion. The second sealing portion is disposed in the first heat dissipation recess. The second sealing portion is connected to the main portion. The second sealing portion is located between the main portion and the first heat dissipation recess, thereby improving the heat dissipation efficiency.

Optionally, in some embodiments of this application, the battery module further includes a first adhesive. The second sealing portion and the main portion are connected to the first heat dissipation recess by the first adhesive, thereby increasing the connection area between the cell housing and the first heat dissipation recess, and improving the heat dissipation efficiency.

Optionally, in some embodiments of this application, the shell includes a first bottom wall. The first heat dissipation element is connected to the first bottom wall. The cell housing includes a bent portion. The bent portion extends beyond the main portion. The battery module further includes a third adhesive. The third adhesive is disposed between the cell housing and the first bottom wall. The third adhesive covers the bent portion, thereby protecting the bent portion, and reducing the risk of corrosion of the bent portion.

Optionally, in some embodiments of this application, the battery module further includes a first thermally conductive piece. The bottom wall of the main portion is connected to the first bottom wall by the first thermally conductive piece. The first thermally conductive piece can increase the connection area between the main body bottom wall and the first bottom wall, thereby improving the heat dissipation efficiency.

Optionally, in some embodiments of this application, a part of the first bottom wall is provided with a bottom wall protrusion. The first thermally conductive piece is disposed on the bottom wall protrusion. The bottom wall protrusion can reduce the thickness of the first thermally conductive piece in the second direction, thereby improving the transfer efficiency of the heat of the battery cell from the main body bottom wall to the first bottom wall, and improving the heat dissipation efficiency.

Optionally, in some embodiments of this application, the bent portion and the bottom wall protrusion are spaced apart from each other, thereby increasing the distance between the bent portion and the first bottom wall, and making it convenient for the third adhesive to cover the bent portion.

Optionally, in some embodiments of this application, the shell includes a first shell opening and a second shell opening. The first heat dissipation channel communicates with the first shell opening and the second shell opening, thereby facilitating heat dissipation.

Optionally, in some embodiments of this application, the first heat dissipation element includes a first heat dissipation front wall and a first heat dissipation rear wall. The first heat dissipation channel runs through the first heat dissipation front wall and the first heat dissipation rear wall. The first heat dissipation front wall and the first heat dissipation rear wall are connected to the shell. When the battery cell expands, the first heat dissipation element can provide a force in the opposite direction of the expansion force, thereby limiting the expansion of the battery cell and improving the cycle performance of the battery cell.

Optionally, in some embodiments of this application, the cell assembly includes a first cell assembly and a second cell assembly. The first cell assembly includes at least a plurality of battery cells, and the second cell assembly includes at least a plurality of battery cells. The first heat dissipation element is disposed between the first cell assembly and the second cell assembly. The first heat dissipation recess accommodates the cell housing of at least one first cell assembly. A part of each cell housing is disposed in the first heat dissipation recess. The first heat dissipation element is further provided with a second heat dissipation recess. The second heat dissipation recess accommodates the cell housing of at least one second cell assembly. A part of each cell housing is disposed in the second heat dissipation recess, and can dissipate heat for the battery cells of the first cell assembly and the second cell assembly, thereby improving heat dissipation and strengthening fixation and protection for the cell housing.

Optionally, in some embodiments of this application, the first heat dissipation element is provided with a plurality of first heat dissipation recesses. Each first heat dissipation recess accommodates a part of one cell housing. The first heat dissipation element is provided with a plurality of second heat dissipation recesses. Each second heat dissipation recess accommodates a part of one cell housing, thereby further improving heat dissipation and further strengthening fixation and protection for the cell housing.

Optionally, in some embodiments of this application, the shell includes a first left wall and a first right wall. The first heat dissipation element is disposed between the first left wall and the first right wall. The first left wall is provided with a first shell recess. The first shell recess accommodates the cell housing of at least one first cell assembly. A part of each cell housing is disposed in the first shell recess. The first right wall is provided with a second shell recess. The second shell recess accommodates the cell housing of at least one second cell assembly. A part of each cell housing is disposed in the second shell recess, and can dissipate heat for the battery cells of the first cell assembly and the second cell assembly, thereby improving heat dissipation efficiency and strengthening fixation and protection for the cell housing.

Optionally, in some embodiments of this application, the battery module further includes a first circuit board. The first circuit board includes a first opening and a second opening. Among two adjacent battery cells, electrode terminals of one of the two adjacent battery cells pass through the first opening, and electrode terminals of the other of the two adjacent battery cells pass through the second opening and are connected to the electrode terminals of the one of the two adjacent in the first opening. The first heat dissipation element includes a base portion. The first heat dissipation recess is disposed on the base portion. The base portion and the first circuit board are spaced apart from each other along a second direction, thereby facilitating mounting of the first circuit board and placement of a first insulation material in a first space.

Optionally, in some embodiments of this application, the first heat dissipation recess extends beyond the cell housing along the second direction, thereby facilitating the heat dissipation and strengthening the fixation and protection for the cell housing.

Optionally, in some embodiments of this application, the battery module further includes a second heat dissipation element. The second heat dissipation element is fixedly connected to the first heat dissipation element. The second heat dissipation element is fixedly connected to the shell. The second heat dissipation element includes a second heat dissipation channel. The shell includes a third shell opening and a fourth shell opening. The second heat dissipation channel is connected to the third shell opening and the fourth shell opening, thereby facilitating heat dissipation.

Optionally, in some embodiments of this application, the first heat dissipation element includes a protrusion. The protrusion and the cell housing are spaced apart from each other. The protrusion is fixed to the second heat dissipation element, thereby reducing interference of the protrusion with the cell housing and the risk that the protrusion damages the cell housing and causes a short circuit. When the battery module is subjected to an external force, the protrusion can transfer the force to the second heat dissipation element, thereby improving protection for the battery cell.

Optionally, in some embodiments of this application, the cell housing and the second heat dissipation element are arranged along a second direction. The protrusion extends beyond the electrode terminals along the second direction, thereby facilitating connection with the second heat dissipation element.

Optionally, in some embodiments of this application, the battery module further includes a first sealing element. The first sealing element is disposed between the first front wall and the first heat dissipation front wall. The first sealing element connects the first front wall and the first heat dissipation front wall, thereby increasing the hermeticity between the first front wall and the first heat dissipation front wall.

Optionally, in some embodiments of this application, the first circuit board is further provided with a second electrically conductive strip. The second electrically conductive strip is connected to the electrode terminals of the first cell assembly and the electrode terminals of the second cell assembly, and is configured to transfer a current from the first cell assembly to the second cell assembly, thereby implementing a series connection or a parallel connection between the first cell assembly and the second cell assembly.

Optionally, in some embodiments of this application, the battery module further includes a first member and a first insulation piece. The first member is disposed on a side of the first circuit board, the side of the first circuit board being a side facing away from the cell housing. A first space is defined between the cell housing and the first member. The first heat dissipation element includes a first channel. The first channel communicates with the first space. The first insulation piece is disposed in the first space. The first insulation piece is configured to be formed by curing the first insulation material disposed in the first space through the first channel. The first insulation piece insulates, fixes, and protects the battery cell.

Optionally, in some embodiments of this application, the first insulation material includes one of a polyurethane adhesive, an epoxy adhesive, or a silicone adhesive.

Optionally, in some embodiments, the first circuit board is further provided with a third opening. The third opening is disposed in the middle of the first circuit board along the second direction. An acquisition assembly is disposed in the third opening.

Optionally, in some embodiments of this application, the first circuit board is further provided with a fourth opening. The fourth opening runs through the first circuit board. The fourth opening communicates with the first channel, thereby making it convenient for the first insulation material to flow into a clearance between the first circuit board and the first member, and making it convenient to adhesively connect the first circuit board to the first member through the first insulation material.

Optionally, in some embodiments of this application, at least a part of the first insulation piece is disposed between the first circuit board and the first member and covers the connection region, thereby insulating and protecting the connection region.

Optionally, in some embodiments of this application, the first insulation piece covers the first circuit board to insulate and protect the first circuit board.

Optionally, in some embodiments of this application, the first insulation piece covers at least a part of each first sealing portion to further insulate and protect the electrode terminals.

Optionally, in some embodiments of this application, the protrusion is disposed on a first heat dissipation top wall, and a third recess is disposed on the second heat dissipation front wall. The protrusion is fixed to the third recess, thereby increasing the connection strength between the first heat dissipation element and the second heat dissipation element.

Optionally, in some embodiments of this application, the first heat dissipation top wall does not extend beyond the first circuit board along the second direction. The first heat dissipation top wall and the first circuit board are spaced apart from each other along the second direction, thereby facilitating assembling of the first circuit board.

Optionally, in some embodiments of this application, an insulation material is disposed on an outer surface of the first member.

Optionally, in some embodiments of this application, the first member includes a connecting body. The connecting body is disposed on a side of the first circuit board, the side of the first circuit board being a side facing away from the cell housing. The connecting body is provided with a fifth opening. The fifth opening runs through the connecting body. A projection of at least a part of the connection region located within a projection of the fifth opening along the second direction.

Optionally, in some embodiments of this application, the battery module includes a second thermally conductive piece. The second thermally conductive piece is disposed in the fifth opening. Along the second direction, one side of the second thermally conductive piece is connected to the connection region, and the other side of the second thermally conductive piece is connected to a second heat dissipation bottom wall of the second heat dissipation element. Heat of the electrode terminals can be transferred to the second heat dissipation element through the second thermally conductive piece and dissipated through the second heat dissipation channel, thereby improving the heat dissipation efficiency.

Optionally, in some embodiments of this application, the connecting body is provided with a sixth opening. The sixth opening runs through the connecting body. The first insulation material flows into the clearance between the connecting body and the second heat dissipation bottom wall through the sixth opening, thereby facilitating bonding of the connecting body to the second heat dissipation bottom wall.

Optionally, in some embodiments of this application, a connecting protrusion is disposed on a side of the connecting body, the side of the connecting body being a side facing the first circuit board. The connecting protrusion is connected to the first circuit board, such that a clearance is formed between the first circuit board and the connecting body. The connection region is located within the clearance, thereby making it convenient for the first insulation material to flow into the clearance to cover the connection region and insulate and protect the connection region, and facilitating bonding of the first circuit board to the connecting body.

Optionally, in some embodiments of this application, the connecting body is provided with a first limiting portion. The first limiting portion is disposed on a side of the connecting body, the side of the connecting body being a side facing away from the first circuit board. Along the second direction, a projection of the seventh opening located within a projection of the first limiting portion. The first limiting portion is disposed in the fifth hole, thereby making it convenient to locate the mounting positions of the second heat dissipation element and the first member.

Optionally, in some embodiments of this application, the first member includes a second limiting portion. The second limiting portion is connected to a side of the connecting body, the side of the connecting body being a side facing away from the first circuit board. Along the second direction, a projection of the eighth opening located within a projection of the second limiting portion. Apart of a first electrical connecting piece is disposed at the second limiting portion, so that the first electrical connecting piece can be insulated and protected.

Optionally, in some embodiments of this application, the first member includes an extension portion. The extension portion is formed by extending an edge of the connecting body along a direction perpendicular to the connecting body. Along the third direction, a projection of the first circuit board located within a projection of the extension portion, thereby insulating and protecting the first circuit board.

Optionally, in some embodiments of this application, the battery module further includes a second insulation piece. The second heat dissipation element is provided with a fifth hole. The fifth hole runs through the second heat dissipation bottom wall and the second heat dissipation top wall. The second insulation piece is at least partially disposed within the fifth hole and covers a wire located within the fifth hole. The second insulation piece is connected to the first insulation piece, and can insulate and protect the first circuit board and the first connecting portion.

Optionally, in some embodiments of this application, the second insulation piece is at least partially disposed at the second limiting portion and covers a first electrically conductive portion and a part of a first insulation portion, thereby further insulating and protecting the first electrical connecting piece.

An embodiment of this application further provides a battery pack. The battery pack includes the battery module disclosed in any one of the above embodiments. The battery pack further includes a top cover and a second circuit board. The second circuit board is connected to the cell assembly. The top cover is connected to the shell.

Optionally, in some embodiments of this application, a second space is defined between the second heat dissipation top wall and the top cover. The second circuit board is located in the second space. The second heat dissipation element can dissipate heat for the second circuit board.

An embodiment of this application further provides an electrical device. The electrical device includes the battery pack disclosed in any one of the above embodiments.

In the battery module, battery pack, and electrical device of this application, by disposing the first heat dissipation recess on the first heat dissipation element and disposing a part of the cell housing in the first heat dissipation recess, the heat of a battery cell can be directly conducted to the first heat dissipation element. The heat is taken away through the first heat dissipation channel, thereby shortening the heat dissipation path. The first heat dissipation recess can increase the heat dissipation area of the first heat dissipation element, thereby improving the heat dissipation efficiency, simplifying the structure of the battery module, and facilitating assembling.

### BRIEF DESCRIPTION OF DRAWINGS

FIG. 1 is a schematic exploded view of a battery module according to some embodiments;
FIG. 2 is a schematic structural diagram of a first heat dissipation element according to some embodiments;
FIG. 3 is a schematic structural diagram of a first heat dissipation element from another viewing angle according to some embodiments;
FIG. 4 is a schematic structural diagram of a first heat dissipation element from another viewing angle according to some embodiments;
FIG. 5 is a schematic structural diagram of a first bottom wall according to some embodiments;
FIG. 6 is a schematic structural diagram of a part of a battery module according to some embodiments;
FIG. 7 is a close-up view of the battery module according to the embodiment shown in FIG. 6;
FIG. 8 is a schematic structural diagram of a battery cell according to some embodiments;
FIG. 9 is a schematic structural diagram of a battery cell from another viewing angle according to some embodiments;
FIG. 10 is a schematic exploded view of a battery cell according to some embodiments;
FIG. 11 is a schematic structural diagram of a part of a battery module viewed along a second direction Y according to some embodiments;
FIG. 12 is a schematic structural diagram of a first circuit board according to some embodiments;
FIG. 13 is a schematic structural diagram of a cell assembly and a first heat dissipation element according to some embodiments;
FIG. 14 is a schematic structural diagram of a cell assembly and a first heat dissipation element from another viewing angle in FIG. 13;
FIG. 15 is a schematic exploded view of the cell assembly and the first heat dissipation element shown in FIG. 13;
FIG. 16 is a schematic structural diagram of a part of a battery module according to some embodiments;
FIG. 17 is a schematic structural diagram of a vertically inverted battery module;
FIG. 18 is a cross-sectional schematic view of a battery pack;
FIG. 19 is a close-up view of a part shown in FIG. 18;
FIG. 20 is a schematic structural diagram of a first member according to some embodiments;
FIG. 21 is a schematic structural diagram of a first member from another viewing angle in FIG. 20;
FIG. 22 is a schematic structural diagram of a second heat dissipation element according to some embodiments;
FIG. 23 is a schematic structural diagram of a second heat dissipation element from another viewing angle in FIG. 22;
FIG. 24 is a schematic exploded view of a partial structure of the battery module shown in FIG. 22;
FIG. 25 is a schematic structural diagram of a battery pack according to some embodiments;
FIG. 26 is a schematic structural diagram of a battery pack from another viewing angle according to some embodiments;
FIG. 27 is a structural exploded view of a battery pack according to some embodiments;
FIG. 28 is a schematic structural diagram of a second circuit board and a top cover according to some embodiments; and
FIG. 29 is a schematic structural diagram of an electrical device according to some embodiments.

### List of reference numerals:

battery module 100
shell 10
first shell opening 10a
second shell opening 10b
third shell opening 10c
fourth shell opening 10d
first front wall 11
first fixing hole 111
first connecting hole 112
first rear wall 12
third fixing hole 121
fourth connecting hole 122
first left wall 13
first heat sink 131
first hole 132
first shell recess 13a
third connecting portion 133
first right wall 14
second shell recess 14a
second heat sink 141
third hole 142
first bottom wall 15
bottom wall protrusion 151
bottom wall base portion 152
fifth fixing hole 153
cell assembly 20
first cell assembly 201
second cell assembly 202
battery cell 21
bent portion 21a
first chamfered structure 21b
cell housing 211
main portion 211a
main body sidewall 2101
main body bottom wall 2102
main body top wall2103
first housing 2111
first recess 2111a
second housing 2112
second recess 2112a
first extension edge 2113
second extension edge 2114
sealing portion211b
first sealing portion 2115
second sealing portion 2116
third sealing portion 2117
electrode terminal 212
connection region 212a
electrode assembly 213
first heat dissipation element 30
first heat dissipation channel 301
first heat dissipation recess 30a
second heat dissipation recess 30b
base portion 31
first heat dissipation front wall 311
second fixing hole 3111
first heat dissipation rear wall 312
fourth fixing hole 3121
first heat dissipation left wall 313
first heat dissipation right wall 314
first heat dissipation bottom wall 315
first opening 315a
sixth fixing hole 3151
first heat dissipation top wall 316
second opening 316a
protrusion 32
seventh connecting hole 321
first circuit board 40
first opening 41
second opening 42
first electrically conductive strip43
second electrically conductive strip 44
third opening 45
fourth opening46
second circuit board 50
first member 60
first space 601
connecting body 61
fifth opening 611
sixth opening 612
connecting protrusion 613
seventh opening 614
first limiting portion 615
first connection wall 615a
second connecting wall615b
third connecting wall 615c
fourth connecting wall 615d
eighth opening616
ninth opening 617
second limiting portion 62
third limiting portion 63
extension portion 64
first insulation piece 70
second heat dissipation element 80
second space 801
hole 80a
second heat dissipation left wall 81
second hole 811
second heat dissipation right wall 82
fourth hole 821
second heat dissipation front wall 83
second connecting hole 831
third recess 832
eighth connecting hole 8321
second heat dissipation rear wall 84
fifth connecting hole 841
fourth recess 842
second heat dissipation bottom wall 85
second heat dissipation top wall 86
fifth hole 87
first notch 88
second notch 89
second insulation piece 90
third insulation piece 91
fourth insulator 92
first fastener 100a
second fastener 100b
third fastener 100c
fourth fastener 100d
fifth fastener 100e
sixth fastener 100f
seventh fastener 100g
eighth fastener 100h
first thermally conductive piece 101
first elastic piece 102
second elastic piece 103
third sealing element 104
third connecting hole 104a
first through-hole 104b
fourth sealing element 105
sixth connecting hole 105a
second through-hole 105b
acquisition assembly 110
first connecting portion 110a
wire 110b
second connecting portion 110c
first electrical connecting piece 120
first electrically conductive portion 120a
first insulation portion 120b
second electrical connecting piece 130
second electrically conductive portion 130a
second insulation portion 130b
battery pack 1000
top cover 1001
third heat sink 1001a
second circuit board 1002
bracket 1003
second space 801
electrical device 2000
first direction X
second direction Y
third direction Z

The following specific embodiments are intended to describe this application in further detail with reference to the drawings.

### DETAILED DESCRIPTION OF EMBODIMENTS

The following specific embodiments are illustrative rather than restrictive, and are intended to provide a basic understanding of this application but not to identify key or decisive elements of this application or to limit the scope of protection. To the extent that no structural conflict exists, various technical features mentioned in different embodiments may be combined in any manner.

A component considered to be "disposed on" or "provided on" another component may be directly positioned on the other component or may be positioned on the other component through an intermediate component in between. A component considered to be "connected to" another component may be directly connected to the other component or may be connected to the other component through an intermediate component.

Understandably, the terms "perpendicular" and "equal" are a description of an ideal state between two components. In an actual production or use state, one component may be approximately perpendicular or equal to another component. For example, numerically, the term "perpendicular" may represent an angle of 90°±10° between two straight lines, or a dihedral angle of 90°±10° between two planes, or an angle of 90°±10° between a straight line and a plane. Two components described as "perpendicular" to each other may be not absolute straight lines or planes, but may be roughly straight lines or planes. An object is considered to be a "straight line" or "plane" if the overall extension direction of the object is a straight line or plane as viewed from a macro perspective.

As used herein, the terms "vertical", "horizontal", "left", "right", "top", "bottom", "front", "rear" and similar expressions are merely intended for ease of description but not for limiting this application.

The term "parallel" is a description of an ideal state between two components. In an actual production or use state, one component may be approximately parallel to another component. For example, numerically, the term "parallel" may represent an angle of 180°±10° between two straight lines, or a dihedral angle of 180°±10° between two planes, or an angle of 180°±10° between a straight line and a plane. The two components described as "parallel" may be not absolute straight lines or planes, but may be roughly straight lines or planes. An object is considered to be a "straight line" or "plane" if the overall extension direction of the object is a straight line or plane as viewed from a macro perspective.

Unless otherwise defined, when used for describing the number of components, the term "plurality" herein specifically means that there are two or more components.

In the first direction X includes a forward direction of the first direction X and a direction opposite to the forward direction of the first direction X, in the second direction Y includes a forward direction of the second direction Y and a direction opposite to the forward direction of the second direction Y, and in the third direction Z includes a forward direction of the third direction Z and a direction opposite to the forward direction of the third direction Z.

For ease of description, the electrode terminals 212 are in some drawings are not bent.

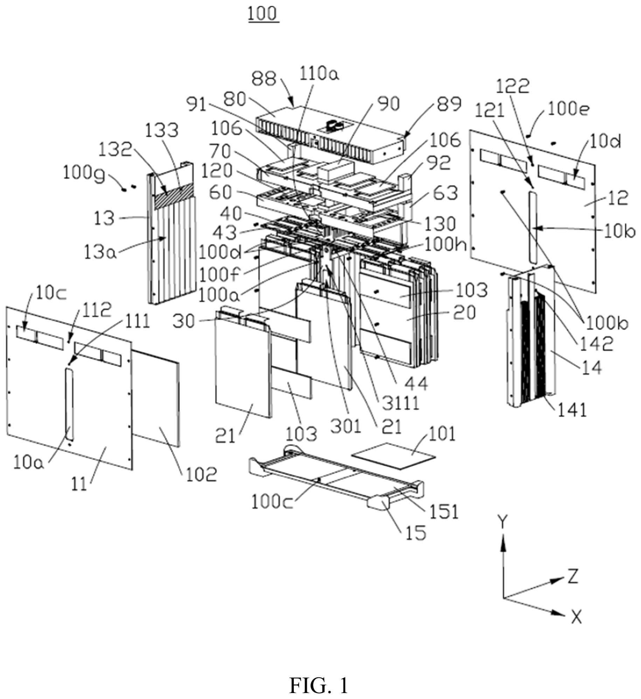

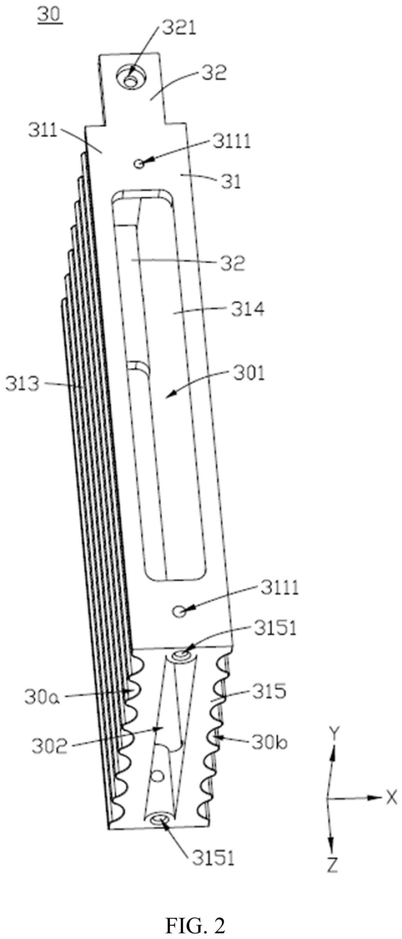

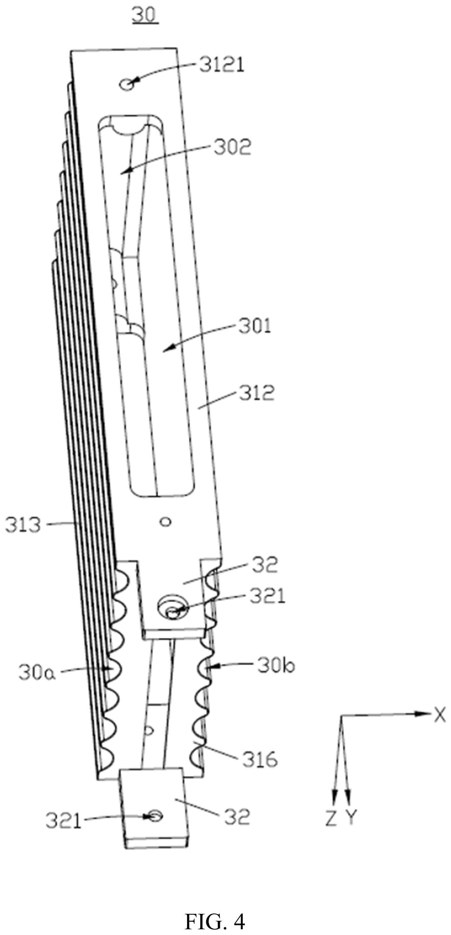

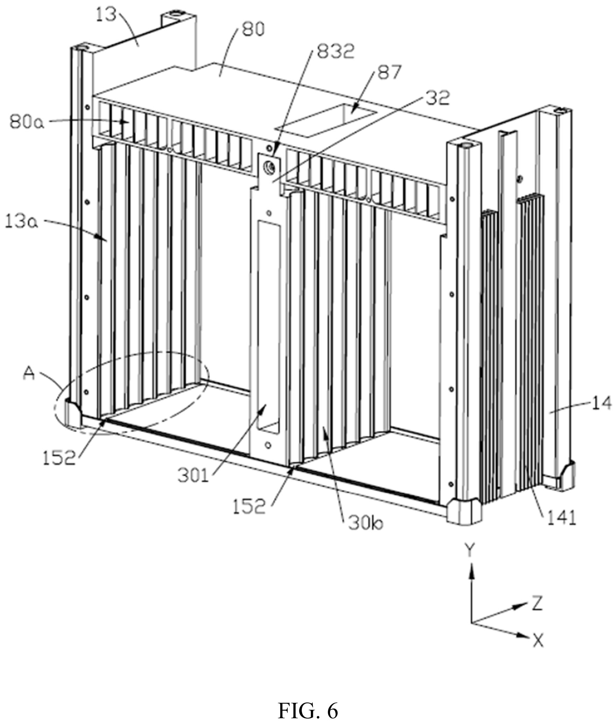

Referring to FIG. 1 to FIG. 6 as well as FIG. 11, an embodiment of this application provides a battery module 100. The battery module 100 includes a shell 10, a cell assembly 20, and a first heat dissipation element 30. The cell assembly 20 is disposed in the shell 10. The cell assembly 20 includes a plurality of battery cells 21. Each battery cell 21 includes a cell housing 211 and electrode terminals 212 extending out of the cell housing 211. The first heat dissipation element 30 includes a first heat dissipation channel 301. The first heat dissipation channel 301 communicates with the outside. The first heat dissipation element 30 is provided with a first heat dissipation recess 30a. The first heat dissipation recess 30a accommodates at least one cell housing 211. A part of each cell housing 211 is disposed in the first heat dissipation recess 30a.

In this application, by disposing the first heat dissipation recess 30a on the first heat dissipation element 30 and disposing a part of the cell housing 211 in the first heat dissipation recess 30a, the heat of a battery cell 21 can be directly conducted to the first heat dissipation element 30. The heat is taken away through the first heat dissipation channel 301, thereby shortening the heat dissipation path. The first heat dissipation recess 30a can increase the heat dissipation area of the first heat dissipation element 30, thereby improving the heat dissipation efficiency, simplifying the structure of the battery module 100, and facilitating assembling.

In some embodiments, the first heat dissipation element 30 is provided with a plurality of first heat dissipation recesses 30a. Each first heat dissipation recess 30a accommodates the cell housing 211 of at least one of the plurality of battery cell21s, and can dissipate heat for the battery cell 21 in each first heat dissipation recess 30a, thereby improving the heat dissipation efficiency.

Referring to FIG. 1, in some embodiments, the shell 10 includes a first front wall 11, a first rear wall 12, a first left wall 13, a first right wall 14, and a first bottom wall 15. The first front wall 11 and the first rear wall 12 are disposed opposite to each other, and the first left wall 13 and the first right wall 14 are disposed opposite to each other. The first bottom wall 15 and the cell assembly 20 are disposed opposite to each other. The first front wall 11 is connected to the first left wall 13 and the first right wall 14. The first rear wall 12 is connected to the first left wall 13 and the first right wall 14. The first bottom wall 15 is connected to the first front wall 11, the first rear wall 12, the first left wall 13, and the first right wall 14 to form an accommodation space. Optionally, the cell assembly 20 and the first heat dissipation element 30 are both accommodated in the accommodation space.

To describe the structure of the battery module 100 more clearly, the structure of the battery module 100 will be described with reference to X, Y, and Z coordinate axes. The X-axis, the Y-axis, and Z-axis are perpendicular to one other. It is defined that the X direction is a first direction, the Y direction is a second direction, and the Z direction is a third direction. The first direction X is a direction in which the first left wall 13 and the second right wall are arranged. The second direction Y is a direction in which the first bottom wall 15 and the cell assembly 20 are arranged. The third direction Z is a direction in which the first front wall 11 and the first rear wall 12 are arranged. The first direction X, the second Y, and the third direction Z are perpendicular to each other.

In some embodiments, at least one of the first front wall 11, the first rear wall 12, the first left wall 13, the first right wall 14, or the first bottom wall 15 includes a thermally conductive material, thereby improving the thermal conductivity. Optionally, the first front wall 11, the first rear wall 12, the first left wall 13, the first right wall 14, and the first bottom wall 15 each include a thermally conductive metal material and a thermally conductive insulation material. The insulation material may cover the outer surface of the thermally conductive metal material. Optionally, the thermally conductive metal material includes aluminum.

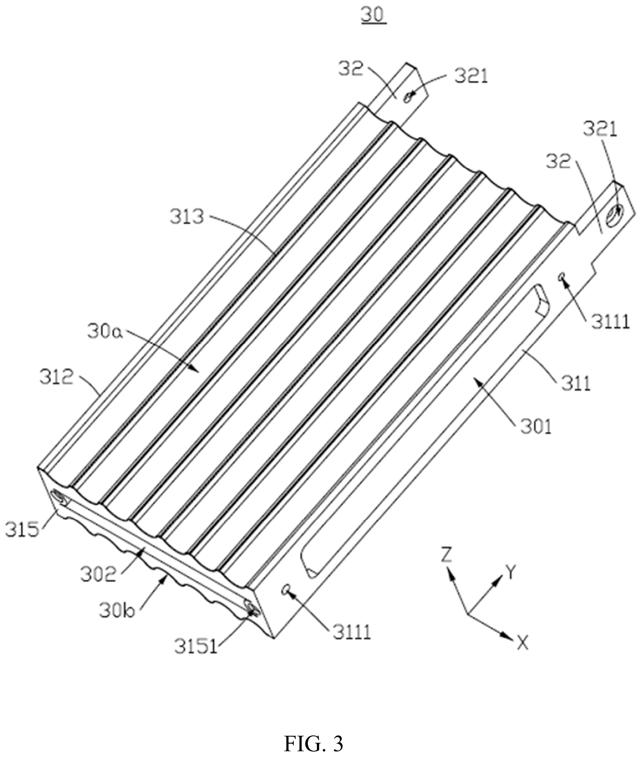

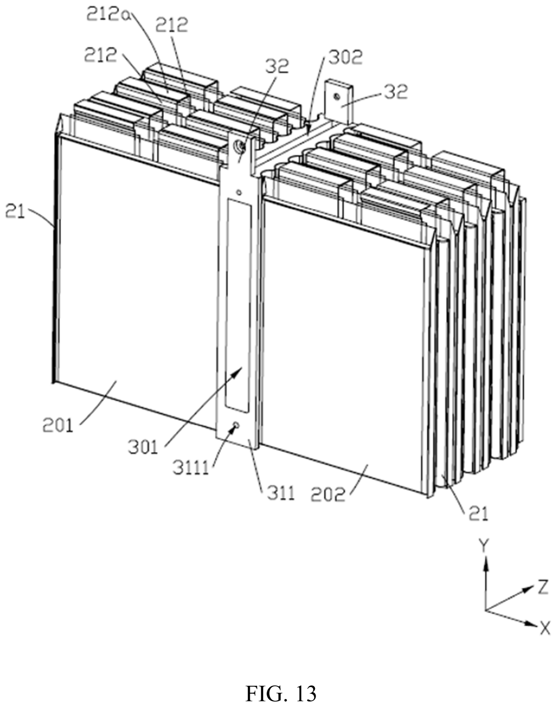

Referring to FIG. 3 and FIG. 13, in some embodiments, at least one of the first front wall 11, the first rear wall 12, the first left wall 13, the first right wall 14, or the first bottom wall 15 is provided with a heat sink, thereby further improving the heat dissipation performance.

Optionally, along the first direction X, a first heat sink 131 is disposed on a side of the first left wall 13, the side of the first left wall 13 being a side facing away from the first right wall 14, and a second heat sink 141 is disposed on a side of the first right wall 14, the side of the first right wall 14 being a side facing away from the first left wall 13.

Referring to FIG. 3, in some embodiments, the shell 10 includes a first shell opening 10a and a second shell opening 10b. The first shell opening 10a runs through the first front wall 11, and the second shell opening 10b runs through the first rear wall 12. A first heat dissipation channel 301 connects the first shell opening 10a and the second shell opening 10b. The first heat dissipation channel 301 communicates with the outside through the first shell opening 10a and the second shell opening 10b.

In some embodiments, the first heat dissipation channel 301 is directly connected to the outside.

In some embodiments, the battery module 100 can be cooled by a cooling medium passing through the first heat dissipation channel 301 to take away heat. Optionally, the cooling medium includes at least one of air or liquid. Optionally, the liquid may be a liquid from the external environment, such as water.

For example, with air used as a cooling medium, in some embodiments, the battery module 100 may be applied to a device that is in a static state during use. When the battery module 100 is in a static state, the heat may be dissipated by utilizing natural air or external air cooling equipment such as a fan. Optionally, the battery module 100 may be applied to a device that is in a dynamic state during use, such as an unmanned aerial vehicle, an electric power-assisted vehicle, in which rapid heat dissipation of the battery module 100 can be implemented due to faster air flow when the device is moving.

Understandably, depending on the movement direction of the battery module 100, the first shell opening 10a may serve as either an air inlet or an air outlet. When the first shell opening 10a serves as an air inlet, the second shell opening 10b serves as an air outlet. When the first shell opening 10a serves as an air inlet, the second shell opening 10b serves as an air inlet.

Referring to FIG. 1 and FIG. 9 to FIG. 11, each battery cell 21 includes electrode terminals 212 and an electrode assembly 213. The electrode assembly 213 is disposed in the cell housing 211. The electrode terminals 212 are connected to the electrode assembly 213 and led out of the cell housing 211.

In some embodiments, the battery cell 21 includes a pouch cell. The cell housing 211 includes a main portion 211a and a sealing portion 211b. The electrode assembly 213 is disposed in the main portion 211a.

In some embodiments, the cell housing 211 includes a first housing 2111 and a second housing 2112. The first housing 2111 is provided with a first recess 2111a, and the second housing 2112 is provided with a second recess 2112a. The first housing 2111 is connected to the second housing 2112 to form an accommodation space. A part of the electrode assembly 213 is disposed in the first recess 2111a, and a part of the electrode assembly is disposed in the second recess 2112a. The periphery of the first housing 2111 extends outward to form a first extension edge 2113. The periphery of the second housing 2112 extends outward to form a second extension edge 2114. After the first housing 2111 is connected to the second housing 2112, the first extension edge 2113 coincides with, and is hermetically connected to, the second extension edge 2114 to form a sealing portion 211b.

In some embodiments, when the electrode assembly 213 is not disposed set in the battery housing 211, and the first housing 2111 and the second housing 2112 are spaced apart from each other.

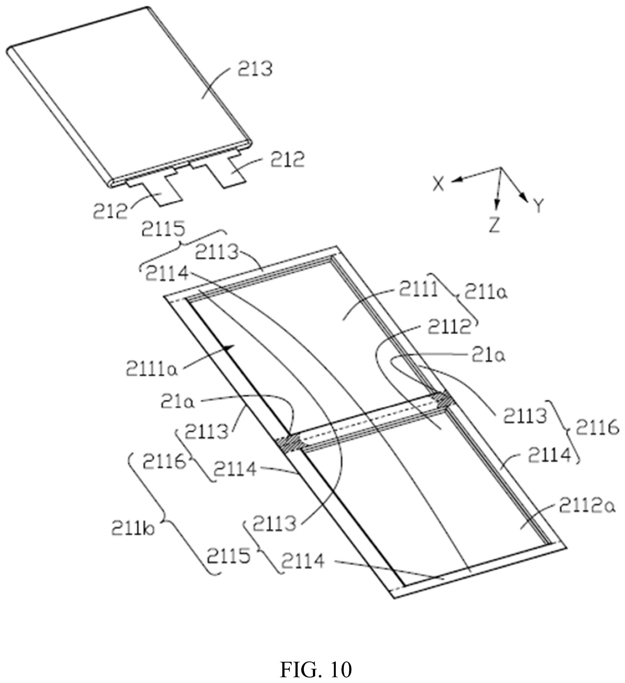

In some embodiments, referring to FIG. 10, when the electrode assembly 213 is not disposed set in the battery housing 211, and the first housing 2111 and the second housing 2112 are connected into one.

In some embodiments, the sealing portion 211b includes a first sealing portion 2115 and two second sealing portions 2116. The first sealing portion 2115 is connected to the two second sealing portions 2116. The two second sealing portions 2116 are arranged along the first direction X. The electrode terminals 212 extend out of the first sealing portion 2115.

Referring to FIG. 1 and FIG. 9 to FIG. 11, in some embodiments, the main portion 211a includes two main body sidewalls 2101, a main body bottom wall 2102, and a main body top wall 2103. The two main body sidewalls 2101 are arranged along the first direction X. The main body bottom wall 2102 and the main body top wall 2103 are arranged along the second direction Y. One second sealing portion 2116 is connected to one main body sidewall 2101, and the other second sealing portion 2116 is connected to the other main body sidewall 2101. The first sealing portion 2115 is connected to the main body top wall 2103.

In some embodiments, a part of the main portion 211a is disposed in the first heat dissipation recess 30a, so that the heat of the battery cell 21 is conducted to the first heat dissipation element 30 through a part of the main portion 211a.

Optionally, a part of one main body sidewall 2101 of each battery cell 21 is disposed in the first heat dissipation recess 30a, so that the heat of the battery cell 21 is conducted to the first heat dissipation element 30 through a part of the main body sidewall 2101.

Optionally, the whole of one main body sidewall 2101 of each battery cell 21 is disposed in the first heat dissipation recess 30a, so that the heat of the battery cell 21 is conducted to the first heat dissipation element 30 through the main body sidewall 2101, thereby increasing the heat conduction area of the main body sidewall 2101 and the first heat dissipation recess 30a, and facilitating heat dissipation.

In some embodiments, a part of the first sealing portion 2115 is disposed in the first heat dissipation recess 30a, so that the heat of the battery cell 21 is conducted to the first heat dissipation element 30 through the first sealing portion 2115, thereby further facilitating heat dissipation.

In some embodiments, one second sealing portion 2116 of each battery cell 21 is disposed in the first heat dissipation recess 30a. The second sealing portion 2116 is located between the main body sidewall 2101 and the first heat dissipation recess 30a. The heat of the battery cell 21 is conducted to the first heat dissipation element 30 through the second sealing portion 2116, thereby further improving the heat dissipation efficiency.

In some embodiments, the battery module 100 further includes a first adhesive (not shown in the figures). The first adhesive can increase the connection area between the cell housing 211 and the first heat dissipation recess 30a, and improve the heat dissipation efficiency.

Optionally, the main body sidewall 2101 is connected to the first heat dissipation recess 30a by a first adhesive.

Optionally, a part of the first sealing portion 2115 is connected to the first heat dissipation recess 30a by the first adhesive.

Optionally, the second sealing portion 2116 is connected to the first heat dissipation recess 30a by the first adhesive.

Optionally, the first adhesive includes a thermally conductive adhesive. Optionally, the first adhesive includes foam that is of adhesive strength.

In some embodiments, the first heat dissipation recess 30a extends beyond the cell housing 211 along the second direction Y, thereby facilitating heat dissipation and strengthening fixation and protection for the cell housing 211.

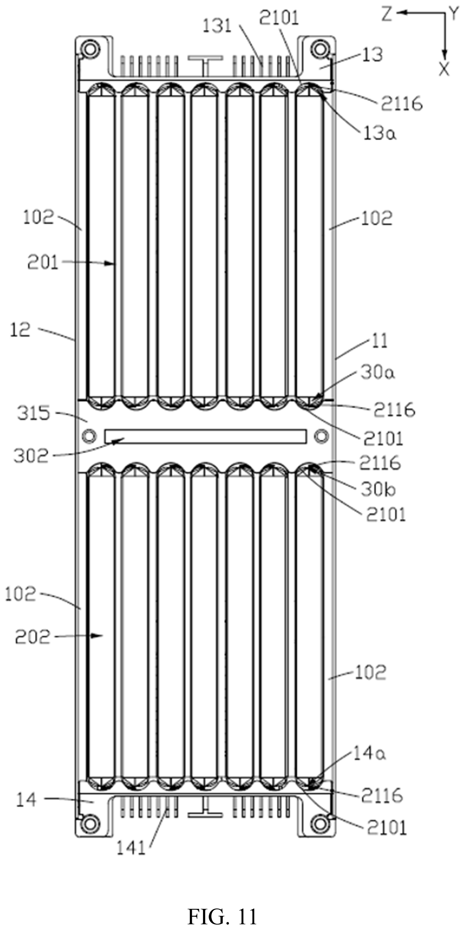

Referring to FIG. 1 and FIG. 11, in some embodiments, the first left wall 13 is provided with a first shell recess 13a. The first shell recess 13a accommodates at least one cell housing 211. A part of each cell housing 211 is disposed in the first shell recess 13a. The first left wall 13 and the first heat dissipation element 30 are arranged along the first direction X. The cell housing 211 is disposed between the first left wall 13 and the first heat dissipation element 30. Along the first direction X, one side of the cell housing 211 is disposed in the first shell recess 13a, and the other side of the cell housing is disposed in the first heat dissipation recess 30a, thereby dissipating heat from both sides of the battery cell 21, and improving the heat dissipation efficiency.

In some embodiments, the first left wall 13 is provided with a plurality of first shell recesses 13a. Each first shell recess 13a accommodates one cell housing 211.

In some embodiments, a part of the main portion 211a is disposed in the first shell recess 13a, so that the heat of the battery cell 21 is conducted to the first left wall 13 through a part of the main portion 211a.

Optionally, a part of the other main body sidewall 2101 of each battery cell 21 is disposed in the first shell recess 13a, so that the heat of the battery cell 21 is conducted to the first left wall 13 through a part of the other main body sidewall 2101.

Optionally, the whole of the other main body sidewall 2101 of each battery cell 21 is disposed in the first shell recess 13a, so that the heat of the battery cell 21 is conducted to the first left wall 13 through the other main body sidewall 2101, thereby increasing the heat conduction area of the main body sidewall 2101 and the first shell recess 13a, and facilitating heat dissipation.

In some embodiments, a part of the first sealing portion 2115 is disposed in the first shell recess 13a, so that the heat of the battery cell 21 is conducted to the first left wall 13 through the first sealing portion 2115, thereby further facilitating heat dissipation.

In some embodiments, the other second sealing portion 2116 of each battery cell is disposed in the first shell recess 13a. The second sealing portion 2116 is located between the main body sidewall 2101 and the first shell recess 13a. The heat of the battery cell 21 is conducted to the first left wall 13 through the second sealing portion 2116, thereby further improving the heat dissipation efficiency.

In some embodiments, the battery module 100 further includes a second adhesive (not shown in the figures). The second adhesive can increase the connection area between the cell housing 211 and the first shell recess 13a, and improve the heat dissipation efficiency.

Optionally, the other main body sidewall 2101 of each battery cell is connected to the first shell recess 13a by a second adhesive.

Optionally, a part of the first sealing portion 2115 is connected to the first shell recess 13a by the second adhesive.

Optionally, the other second sealing portion 2116 is connected to the first shell recess 13a by the second adhesive.

Optionally, the second adhesive includes a thermally conductive adhesive. Optionally, the second adhesive includes foam that is of adhesive strength.

In some embodiments, the first shell recess 13a extends beyond the cell housing 211 along the second direction Y, thereby facilitating heat dissipation and strengthening fixation and protection for the cell housing 211.

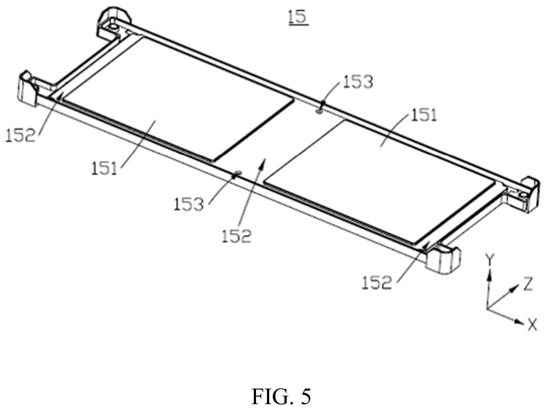

Referring to FIG. 1 and FIG. 5, in some embodiments, the main body bottom wall 2102 is connected to the first bottom wall 15. The heat of the battery cell 21 of the main body bottom wall 2102 can be conducted to the first bottom wall 15 through the main body bottom wall 2102 and dissipated through the first bottom wall 15.

In some embodiments, the battery module 100 further includes a first thermally conductive piece 101. The main body bottom wall 2102 is connected to the first bottom wall 15 by the first thermally conductive piece 101. The first thermally conductive piece 101 can increase the connection area between the main body bottom wall 2102 and the first bottom wall 15, thereby improving the heat dissipation efficiency. Optionally, the first thermally conductive piece 101 includes a thermal pad.

In some embodiments, a part of the first bottom wall 15 is provided with a bottom wall protrusion 151. The first thermally conductive piece 101 is disposed on the bottom wall protrusion 151, thereby improving the transfer efficiency of the heat of the battery cell 21 from the main body bottom wall 2102 to the first bottom wall 15, and improving the heat dissipation efficiency.

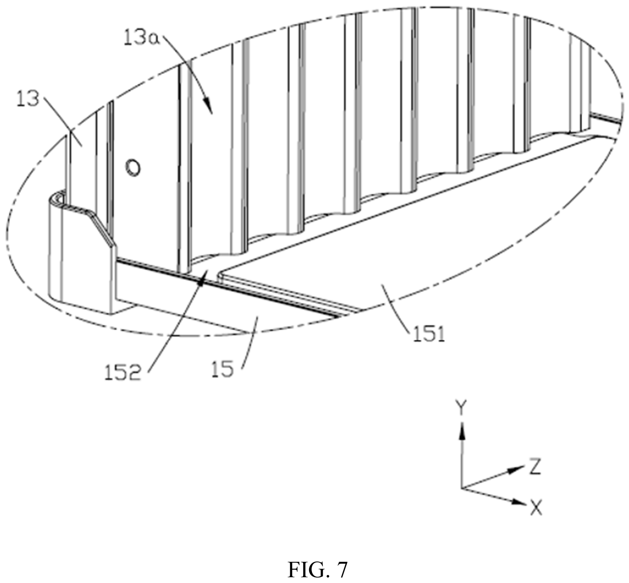

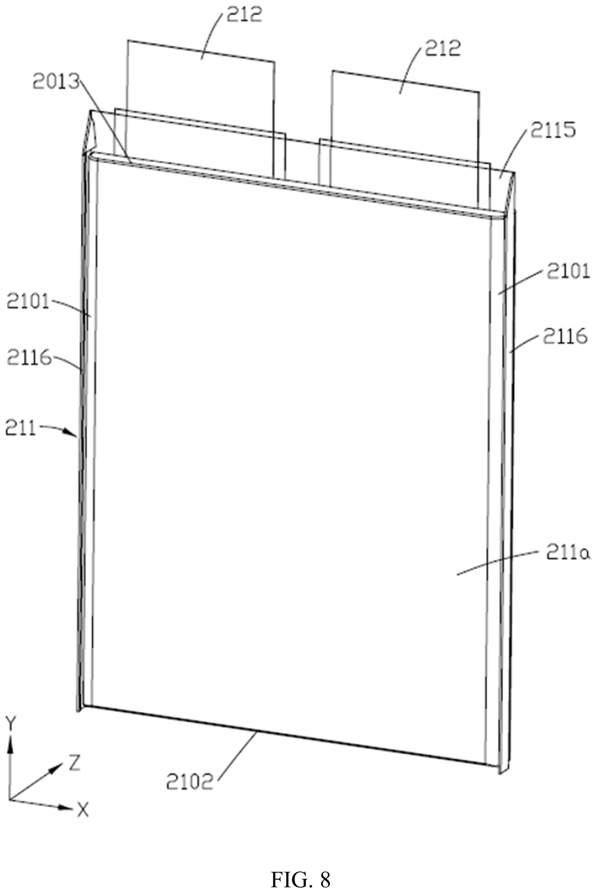

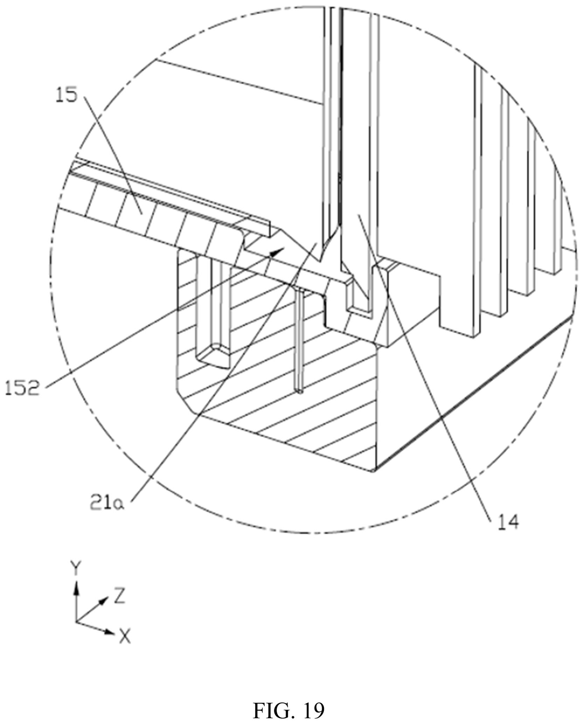

Referring to FIG. 1, FIG. 5 to FIG. 11, and FIG. 19, in some embodiments, the first bottom wall 15 includes a bottom wall base portion 152 and a bottom wall protrusion 151. The bottom wall protrusion 151 protrudes beyond the bottom wall base portion 152, and the bottom wall protrusion 151 faces the first heat dissipation element 30. The first heat dissipation element 30 is disposed on the bottom wall base portion 152.

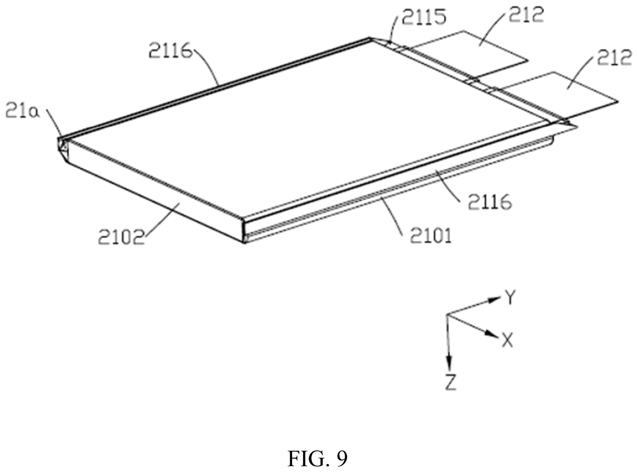

In some embodiments, a part of the second sealing portion 2116 and a part of the main body bottom wall 2102 form a bent portion 21a (as shown in FIG. 9). A part of the other second sealing portion 2116 and a part of the main body bottom wall 2102 form another bent portion 21a. The bent portion 21a extends beyond the main portion 211a along a direction opposite to the second direction Y.

In some embodiments, the battery module 100 further includes a third adhesive (not shown in the figure). The third adhesive is disposed between the bottom wall base portion 152 and the bent portion 21a and covers the bent portion 21a, thereby protecting the bent portion 21a, and reducing the risk of corrosion of the bent portion 21a.

In some embodiments, the bent portion 21a and the bottom wall protrusion 151 are spaced apart from each other, thereby increasing the distance between the bent portion 21a and the first bottom wall 15, and making it convenient for the third adhesive to cover the bent portion 21a.

In some embodiments, the cell housing 211 includes a protection layer, a metal layer, and a polymer layer that are stacked in sequence. The protection layer is configured to protect the metal layer, reduce the risk of damage to the metal layer caused by an external force, and defer air permeation from an external environment. The metal layer may be an aluminum foil layer or a steel foil layer. The polymer layer is heat-meltable and applicable to sealing.

In some embodiments, the metal layer of an end face formed by cutting the cell housing 211 is exposed, posing an increased risk of corrosion. In this application, the risk of corrosion of the metal layer is reduced by covering the bent portion 21a with the third adhesive.

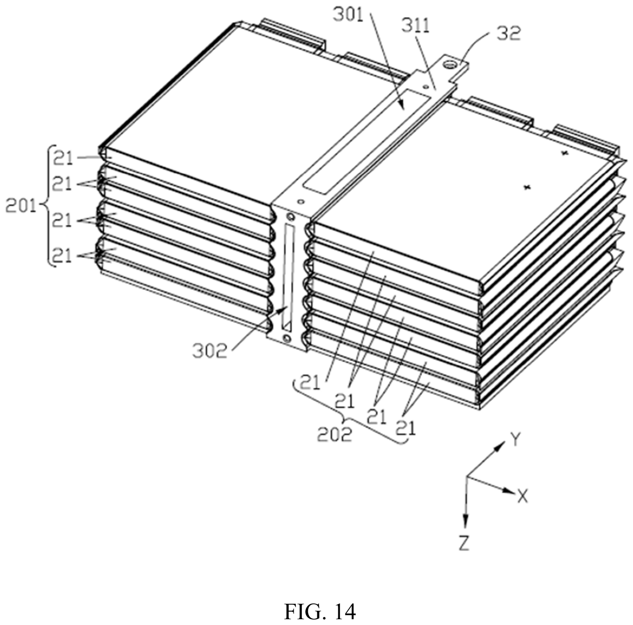

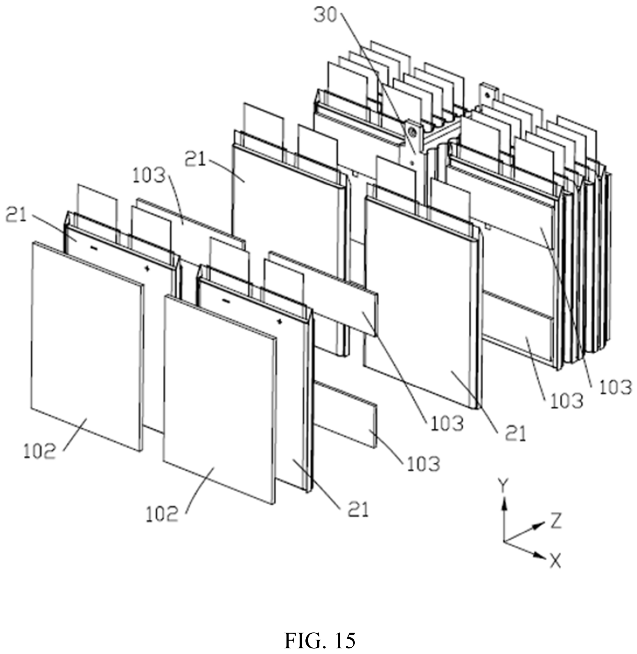

Referring to FIG. 1, FIG. 11, and FIG. 13 to FIG. 15, in some embodiments, the cell assembly 20 includes a first cell assembly 201 and a second cell assembly 202. The first cell assembly 201 includes a plurality of battery cells 21, and the second cell assembly 202 includes a plurality of battery cells 21. The first cell assembly 201 and the second cell assembly 202 are arranged along the first direction X. The first cell assembly 201 is located between the first left wall 13 and the first heat dissipation element 30. The second cell assembly 202 is located between the first heat dissipation element 30 and the first right wall 14. The first heat dissipation element 30 is disposed between the first cell assembly 201 and the second cell assembly 202.

In some embodiments, a plurality of battery cells 21 of the first cell assembly 201 are stacked along the first direction X. A plurality of battery cells 21 of the second cell assembly 202 are stacked along the first direction X.

In some embodiments, the first heat dissipation element 30 includes a second heat dissipation recess 30b. The first heat dissipation recess 30a accommodates the cell housing 211 of at least one cell assembly 201. A part of each cell housing 211 is disposed in the first heat dissipation recess 30a. The second heat dissipation recess 30b accommodates the cell housing 211 of at least one second cell assembly 202. A part of each cell housing 211 is disposed in the second heat dissipation recess 30b.

In some embodiments, the first heat dissipation element 30 includes a plurality of first heat dissipation recesses 30a. Each first heat dissipation recess 30a accommodates a part of one cell housing 211, and can dissipate heat for the battery cell 21 in each first heat dissipation recess 30a, thereby improving the heat dissipation efficiency and enhancing fixation and protection for the cell housing 211.

In some embodiments, the first heat dissipation element 30 includes a plurality of second heat dissipation recesses 30b. Each second heat dissipation recess 30b accommodates a part of one cell housing 211, and can dissipate heat for the battery cell 21 in each second heat dissipation recess 30b, thereby improving the heat dissipation efficiency and enhancing fixation and protection for the cell housing 211.

In some embodiments, the first right wall 14 is provided with a second shell recess 14a. The second shell recess 14a accommodates at least one cell housing 211. A part of each cell housing 211 of the second cell assembly 202 is disposed in the second shell recess 14a. The first heat dissipation element 30 and the first right wall 14 are arranged along the first direction X. The cell housing 211 of the second cell assembly 202 is disposed between the first right wall 14 and the first heat dissipation element 30. Along the first direction X, one side of the cell housing 211 of the second cell assembly 202 is disposed in the second shell recess 14a, and the other side of the cell housing is disposed in the second heat dissipation recess 30b, thereby dissipating heat from both sides of the battery cell 21, and improving the heat dissipation efficiency.

In some embodiments, the first right wall 14 is provided with a plurality of second shell recesses 14a. Each second shell recess 14a accommodates one cell housing 211 of the second cell assembly 202.

In some embodiments, the second shell recess 14a extends beyond the cell housing 211 along the second direction Y, thereby facilitating heat dissipation and strengthening fixation and protection for the cell housing 211.

In some embodiments, along the first direction X, one side of the cell housing 211 of the first cell assembly 201 is disposed in the first shell recess 13a, and the other side of the cell housing is disposed in the first heat dissipation recess 30a. Along the first direction X, one side of the cell housing 211 of the second cell assembly 202 is disposed in the second heat dissipation recess 30b, and the other side of the cell housing is disposed in the second shell recess 14a.

In some embodiments, among the battery cells 21 of the first cell assembly 201, one main body sidewall 2101 of each battery cell 21 is disposed in the first heat dissipation recess 30a, and the other main body sidewall 2101 of the battery cell 21 is disposed in the first shell recess 13a. One second sealing portion 2116 of each battery cell 21 is disposed in the first heat dissipation recess 30a, and the other second sealing portion 2116 of each battery cell 21 is disposed in the first shell recess 13a.

In some embodiments, among the battery cells 21 of the second cell assembly 202, one main body sidewall 2101 of each battery cell 21 is disposed in the second heat dissipation recess 30b, and the other main body sidewall 2101 of the battery cell 21 is disposed in the second shell recess 14a. One second sealing portion 2116 of each battery cell 21 is disposed in the second heat dissipation recess 30b, and the other second sealing portion 2116 of each battery cell 21 is disposed in the second shell recess 14a.

In some embodiments, among the battery cells 21 of the first cell assembly 201, a part of the first sealing portion 2115 of each battery cell 21 is disposed in the first heat dissipation recess 30a, and a part of the first sealing portion 2115 of each battery cell 21 is disposed in the first shell recess 13a.

In some embodiments, among the battery cells 21 of the second cell assembly 202, a part of the first sealing portion 2115 of each battery cell 21 is disposed in the second heat dissipation recess 30b, and a part of the first sealing portion 2115 of each battery cell 21 is disposed in the second shell recess 14a.

In some embodiments, the battery module 100 includes a first elastic piece 102. The first elastic piece 102 is disposed between the first front wall 11 and the outermost battery cell 21, and can provide expansion space for the battery cell 21, and can reduce the heat dissipated by the battery cell 21 through the first front wall 11, and reduce the temperature difference between different battery cells 21, thereby improving the performance of the battery module 100.

In some embodiments, the first elastic piece 102 is disposed between the first rear wall 12 and the outermost battery cell 21, and can further provide expansion space for the battery cell 21, further reduce the heat dissipated by the battery cell 21 through the first rear wall 12, and reduce the temperature difference between different battery cells 21, thereby further improving the performance of the battery module 100.

In some embodiments, the first elastic piece 102 includes foam.

In some embodiments, the battery module 100 includes a second elastic piece 103. The second elastic piece 103 is disposed between adjacent battery cells 21, and can provide expansion space for the battery cell 21. Optionally, the second elastic piece 103 includes foam.

Referring to FIG. 1 to FIG. 4 and FIG. 13 to FIG. 15, in some embodiments, the first heat dissipation element 30 includes a base portion 31. The base portion 31 includes a first heat dissipation front wall 311 and a first heat dissipation rear wall 312 arranged along a third direction Z. The first heat dissipation channel 301 runs through the first heat dissipation front wall 311 and the first heat dissipation rear wall 312. The first heat dissipation front wall 311 is fixedly connected to the first front wall 11, and the first heat dissipation rear wall 312 is fixedly connected to the first rear wall 12. When the battery cell 21 expands, the first heat dissipation element 30 can provide a force in the opposite direction of the expansion force, thereby limiting the expansion of the battery cell 21 and improving the cycle performance of the battery cell 21.

In some embodiments, the battery module 100 includes a first fastener 100a. The first front wall 11 is provided with a first fixing hole 111. The first heat dissipation front wall 311 is provided with a second fixing hole 3111. The first fastener 100a is connected to the first fixing hole 111 and the second fixing hole 3111 to fixedly connect the first heat dissipation front wall 311 to the first front wall 11.

In some embodiments, the battery module 100 further includes a first sealing element (not shown in the figures). The first sealing element is disposed between the first front wall 11 and the first heat dissipation front wall 311. The first sealing element connects the first front wall 11 and the first heat dissipation front wall 311, thereby increasing the hermeticity between the first front wall 11 and the first heat dissipation front wall 311. Optionally, the first sealing element is bonded to the first front wall 11 and the first heat dissipation front wall 311. Optionally, the first sealing element includes foam. Optionally, the first sealing element includes a sealing adhesive.

In some embodiments, the battery module 100 includes a second fastener 100b. The first rear wall 12 is provided with a third fixing hole 121. The first heat dissipation rear wall 312 is provided with a fourth fixing hole 3121. The second fastener 100b is connected to the third fixing hole 121 and the fourth fixing hole 3121 to fixedly connect the first heat dissipation rear wall 312 to the first rear wall 12.

In some embodiments, the battery module 100 further includes a second sealing element (not shown in the figures). The second sealing element is disposed between the first rear wall 12 and the first heat dissipation rear wall 312. The second sealing element connects the first rear wall 12 and the first heat dissipation rear wall 312, thereby increasing the hermeticity between the first rear wall 12 and the first heat dissipation rear wall 312. Optionally, the second sealing element is bonded to the first rear wall 12 and the first heat dissipation rear wall 312. Optionally, the second sealing element includes foam. Optionally, the second sealing element includes a sealing adhesive.

In some embodiments, the base portion 31 includes a first heat dissipation left wall 313 and a first heat dissipation right wall 314 arranged along the first direction X. The first heat dissipation recess 30a is disposed on the first heat dissipation left wall 313, and the second heat dissipation recess 30b is disposed on the first heat dissipation right wall 314.

In some embodiments, the base portion 31 includes a first heat dissipation bottom wall 315 and a first heat dissipation top wall 316 arranged along the second direction Y. The first heat dissipation bottom wall 315 is connected to the bottom wall base portion 152 of the first bottom wall 15.

In some embodiments, the battery module 100 includes a third fastener 100c. The first bottom wall 15 is provided with a fifth fixing hole 153. The first heat dissipation bottom wall 315 is provided with a sixth fixing hole 3151. The third fastener 100c is connected to the fifth fixing hole 153 and the sixth fixing hole 3151 to fixedly connect the first heat dissipation bottom wall 315 to the first bottom wall 15.

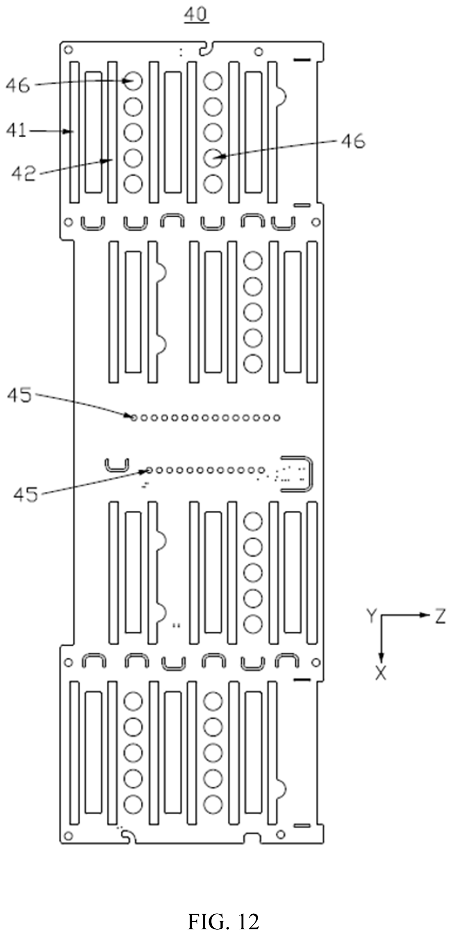

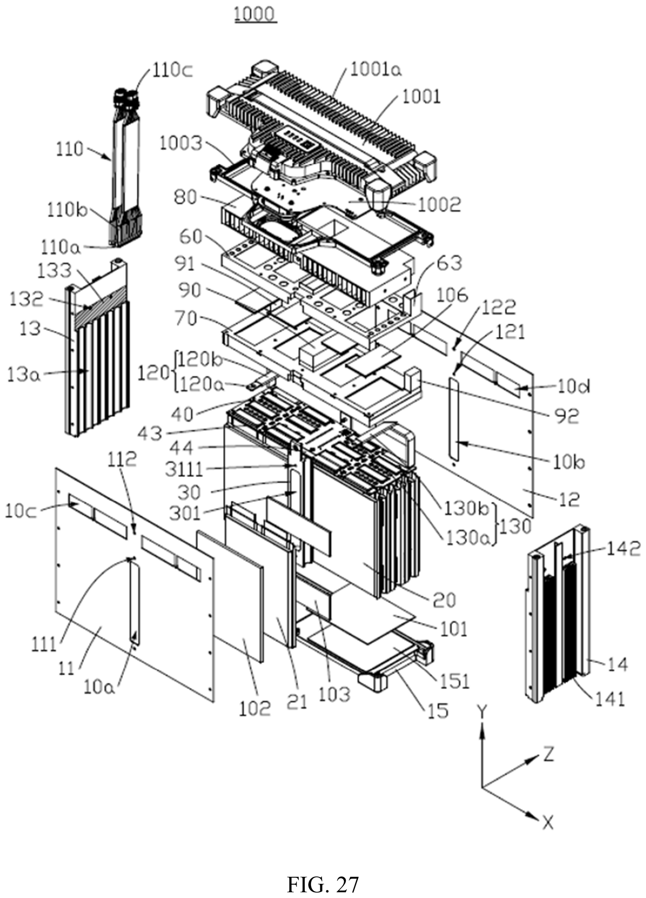

Referring to FIG. 1, FIG. 12, FIG. 18, and FIG. 27, in some embodiments, the battery module 100 further includes a first circuit board 40. The cell housing 211 and the first circuit board 40 are arranged along the second direction Y. The base portion 31 and the first circuit board 40 are spaced apart from each other along the second direction Y.

In some embodiments, the first circuit board 40 is provided with a first opening 41 and a second opening 42 arranged along the third direction Z. The first opening 41 and the second opening 42 extend along the first direction X. Among two adjacent battery cells 21, an electrode terminal 212 of one of the two adjacent battery cells 21 passes through the first opening 41, and an electrode terminal 212 of the other of the two adjacent battery cells 21 passes through the second opening 42. The two electrode terminals 212 are connected to each other in a stacked manner to form a connection region 212a. The connection region 212a is connected to the first circuit board 40.

In some embodiments, the first circuit board 40 is provided with a plurality of first electrically conductive strips 43. The first electrically conductive strips 43 are connected to the first circuit board 40. Among two adjacent battery cells 21, an electrode terminal 212 of one battery cell 21 passes through the first opening 41, and an electrode terminal 212 of the other battery cell 21 passes through the second opening 42. The two electrode terminals 212 are welded onto the first electrically conductive strips 43 in a stacked manner. The welding includes laser welding, ultrasonic welding, and the like. In other embodiments, the connection region 212a may be connected to the first electrically conductive strip 43 by other means such as conductive adhesive.

In some embodiments, the first electrically conductive strip 43 is configured to acquire electrical signal information of the battery cell 21. The electrical signal information includes, but is not limited to, voltage, current, temperature, and resistance.

In an embodiment, the first circuit board 40 is further provided with a second electrically conductive strip 44. The second electrically conductive strip 44 is connected to the electrode terminals 212 of the first cell assembly 201 and the electrode terminals 212 of the second cell assembly 202, and is configured to transfer a current from the first cell assembly 201 to the second cell assembly 202, thereby implementing a series connection or a parallel connection between the first cell assembly 201 and the second cell assembly 202.

In some embodiments, the battery module 100 further includes an acquisition assembly 110. The acquisition assembly 110 is electrically connected to the first electrically conductive strip 43. The acquisition assembly 110 transmits the electrical signal information of the cell assembly 20. The electrical signal information includes, but is not limited to, voltage, current, temperature, and resistance.

In some embodiments, the first circuit board 40 is further provided with a third opening 45. Along the first direction X, the third opening 45 is disposed at the middle of the first circuit board 40. The acquisition assembly 110 is disposed at the third opening 45.

In some embodiments, the acquisition assembly 110 includes a first connecting portion 110a, a wire 110b, and a second connecting portion 110c. The first connecting portion 110a is connected to the first circuit board 40 through a plurality of third openings 45. The wire 110b connects the first connecting portion 110a and the second connecting portion 110c.

Optionally, the first circuit board 40 includes a flexible circuit board (FPC). Optionally, the first circuit board 40 includes a printed circuit board (PCB).

In some embodiments, the battery module 100 further includes a first electrical connecting piece 120 and a second electrical connecting piece 130. The first electrical connecting piece 120 and the second electrical connecting piece 130 are connected to the first electrically conductive strip 43, and is electrically connected to an external device to enable input or output of electrical energy. Optionally, the first electrical connecting piece 120 and the second electrical connecting piece 130 are welded to the first circuit board 40. Optionally, the first electrical connecting piece 120 includes a copper busbar, and the second electrical connecting piece 130 includes a copper busbar.

In some embodiments, the first electrical connecting piece 120 includes a first electrically conductive portion 120a and a first insulation portion 120b. The first electrically conductive portion 120a extends from two ends of the first insulation portion 120b. One end of the first electrically conductive portion 120a is connected to the first electrically conductive strip 43, and another end of the first electrically conductive portion 120a is connected to an external device.

In some embodiments, the second electrical connecting piece 130 includes a second electrically conductive portion 130a and a second insulation portion 130b. The second electrically conductive portion 130a extends out from two ends of the second insulation portion 130b. One end of the second electrically conductive portion 130a is connected to another first electrically conductive strip 43, and another end of the second electrically conductive portion 130a is connected to an external device.

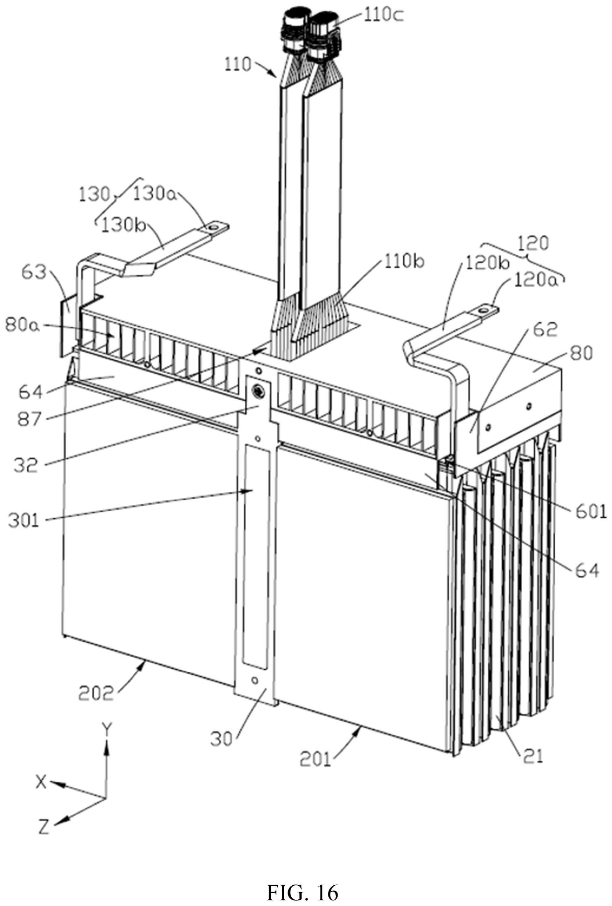

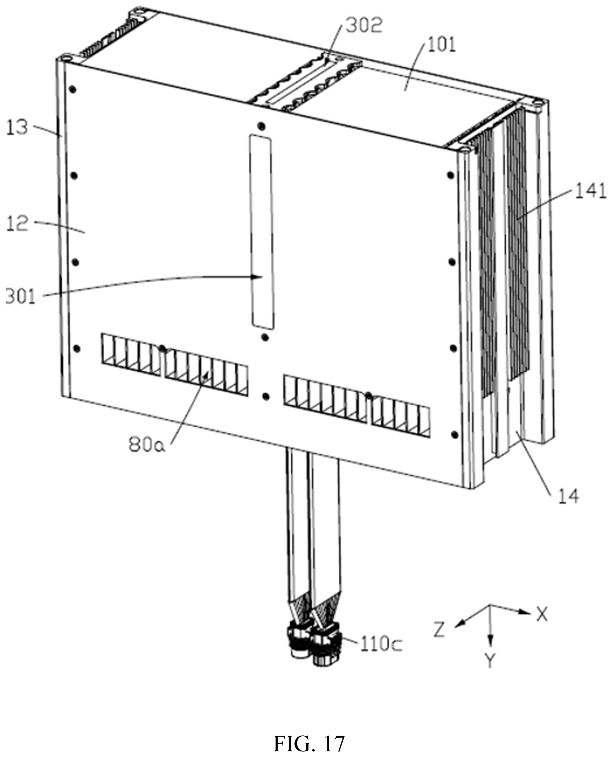

Referring to FIG. 1 and FIG. 16 to FIG. 18, in some embodiments, the battery assembly 100 further includes a first member 60 and a first insulation piece 70. The first member 60 is disposed on a side of the first circuit board 40, the side of the first circuit board 40 being a side facing away from the cell housing 211. A first space 601 is defined between the cell housing 211 and the first member 60. The first heat dissipation element 30 includes a first channel 302. The first channel 302 communicates with the first space 601. The first insulation piece 70 is disposed in the first space 601. The first insulation piece 70 is configured to be formed by disposing a first insulation material in the first space 601 through the first channel 302 and curing the first insulation material.

In some embodiments, the first insulation material includes one of a polyurethane adhesive, an epoxy adhesive, or a silicone adhesive. Optionally, the first insulation material includes a potting adhesive. Optionally, the first insulation material includes a foam adhesive.

In some embodiments, the first channel 302 is a hole that runs through the first heat dissipation top wall 316. Optionally, after the first insulation material is cured, a sealing element may be disposed in the first channel 302 to seal the first channel 302.

In some embodiments, the first channel 302 runs through the first heat dissipation bottom wall 315 and the first heat dissipation top wall 316.

In some embodiments, the first channel 302 communicates with the first heat dissipation channel 301.

In some embodiments, the first circuit board 40 is further provided with a fourth opening 46. The fourth opening 46 runs through the first circuit board 40 along the second direction Y. The fourth opening 46 communicates with the first channel 302, thereby making it convenient for the first insulation material to flow into a clearance between the first circuit board 40 and the first member 60, and making it convenient to adhesively connect the first circuit board 40 to the first member 60 through the first insulation material.

In some embodiments, at least a part of the first insulation piece 70 is disposed between the first circuit board 40 and the first member 60 and covers the connection region 212a, thereby insulating and protecting the connection region 212a.

In some embodiments, the first insulation piece 70 covers the first circuit board 40 to insulate and protect the first circuit board 40.

In some embodiments, the first insulation piece 70 covers at least a part of each first sealing portion 2115 to further insulate and protect the electrode terminals 212.

In some embodiments, the battery cell 21, the first circuit board 40, and the first member 60 are adhesively connected by the first insulation piece 70.

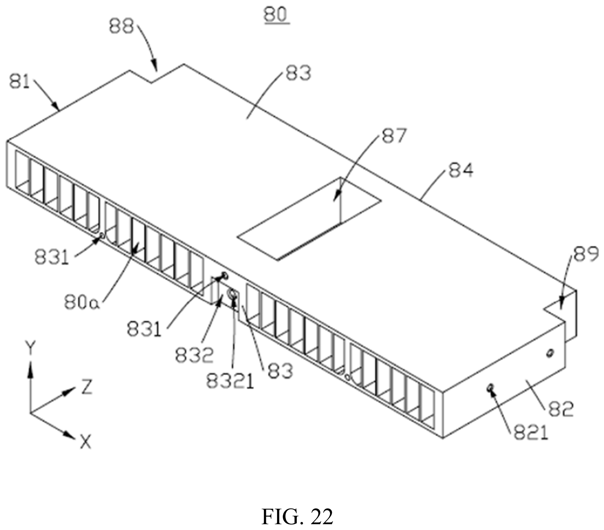

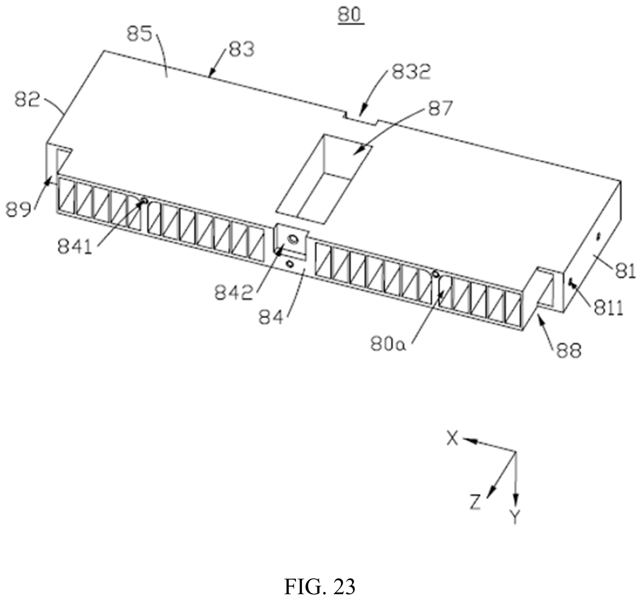

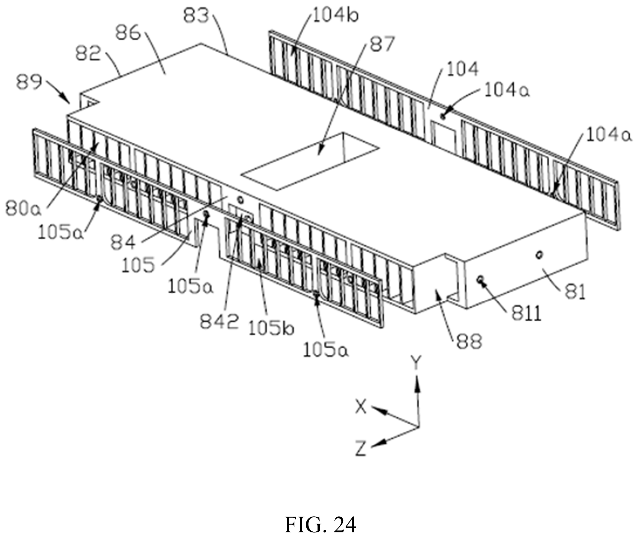

Referring to FIG. 1, FIG. 6, FIG. 16, FIG. 18, and FIG. 22 to FIG. 24, in some embodiments, the battery module 100 further includes a second heat dissipation element 80. The second heat dissipation element 80 is disposed on a side of the first member 60, the side of the first member 60 being a side facing away from the first circuit board 40. The first insulation piece 70 is disposed in the clearance between the first member 60 and the second heat dissipation element 80. The second heat dissipation element 80 is bonded to the first member 60 by the first insulation piece 70. The second heat dissipation element 80 is fixedly connected to the shell 10. Optionally, the second heat dissipation element 80 is fixedly connected to the shell 10 by a screw. Optionally, the second heat dissipation element 80 is adhesively connected to the shell 10 by an adhesive. Optionally, the second heat dissipation element 80 is connected to the shell 10 by a snap-on structure.

In some embodiments, the second heat dissipation element 80 includes a hole 80a, thereby being conducive to reducing weight of the second heat dissipation element 80. The second heat dissipation element 80 is connected to the first heat dissipation element 30, thereby increasing the structural strength of the second heat dissipation element 80. The first heat dissipation element 30 is connected to the first bottom wall 15, and the second heat dissipation element 80 is connected to the shell 10, thereby increasing the connection strength between the first heat dissipation element 30 and the second heat dissipation element 80.

In some embodiments, the second heat dissipation element 80 includes a second heat dissipation left wall 81, a second heat dissipation right wall 82, a second heat dissipation front wall 83, and a second heat dissipation rear wall 84. The second heat dissipation left wall 81 and the second heat dissipation right wall 82 are arranged along the first direction X. The second heat dissipation front wall 83 and the second heat dissipation rear wall 84 are arranged along the third direction Z. The second heat dissipation left wall 81 is connected to the second heat dissipation front wall 83 and the second heat dissipation rear wall 84. The second heat dissipation right wall 82 is connected to the second heat dissipation front wall 83 and the second heat dissipation rear wall 84.

In some embodiments, the hole 80a runs through the second heat dissipation front wall 83 and the second heat dissipation rear wall 84. The hole 80a serves as a second heat dissipation channel. The first front wall 11 is provided with a third shell opening 10c, and the first rear wall 12 is provided with a fourth shell opening 10d. The second heat dissipation channel connects the third shell opening 10c and the fourth shell opening 10d.

In some embodiments, the battery module further includes a fourth fastener 100d. The first front wall 11 is provided with a first connecting hole 112. The second heat dissipation front wall 83 is provided with a second connecting hole 831. The fourth fastener 100d is connected to the first connecting hole 112 and the second connecting hole 831 to fixedly connect the second heat dissipation front wall 83 to the first front wall 11.

In some embodiments, the battery module 100 includes a third sealing element 104. The third sealing element 104 is disposed between the second heat dissipation front wall 83 and the first front wall 11, thereby improving the hermeticity between the second heat dissipation front wall 83 and the first front wall 11. Optionally, the third sealing element 104 is provided with a third connecting hole 104a. The fourth fastener 100d is connected to the first connecting hole 112, the third connecting hole 104a, and the second connecting hole 831 to fix the third sealing element 104 between the second heat dissipation front wall 83 and the first front wall 11. Optionally, the third sealing element 104 is bonded to the second heat dissipation front wall 83 and the first front wall 11. The third sealing element 104 is provided with a first through-hole 104b. The first through-hole 104b runs through the third sealing element 104. Along the third direction Z, a projection of the first through-hole 104b partially overlaps a projection of the hole 80a. Optionally, the projection of the first through-hole 104b fully overlaps the projection of the hole 80a. Optionally, the third sealing element 104 includes foam.

In some embodiments, the battery module further includes a fifth fastener 100e. The first rear wall 12 is provided with a fourth connecting hole 122. The second heat dissipation rear wall 84 is provided with a fifth connecting hole 841. The fifth fastener 100e is connected to the fourth connecting hole 122 and the fifth connecting hole 841 to fixedly connect the second heat dissipation rear wall 84 to the first rear wall 12.

In some embodiments, the battery module 100 includes a fourth sealing element 105. The fourth sealing element 105 is disposed between the second heat dissipation rear wall 84 and the first rear wall 12, thereby improving the hermeticity between the second heat dissipation rear wall 84 and the first rear wall 12. Optionally, the fourth sealing element 105 is provided with a sixth connecting hole 105a. The fifth fastener 100e is connected to the fourth connecting hole 122, the sixth connecting hole 105a, and the fifth connecting hole 841 to fix the fourth sealing element 105 between the second heat dissipation rear wall 84 and the first rear wall 12. Optionally, the fourth sealing element 105 is bonded to the second heat dissipation rear wall 84 and the first rear wall 12. The fourth sealing element 105 is provided with a second through-hole 105b. The second through-hole 105b runs through the fourth sealing element 105. Along the third direction Z, a projection of the second through-hole 105b partially overlaps the projection of the hole 80a. Optionally, the projection of the second through-hole 105b fully overlaps the projection of the hole 80a. Optionally, the fourth sealing element 105 includes foam.

In some embodiments, the second heat dissipation left wall 81 is connected to the first left wall 13. The battery module further includes a seventh fastener 100g. The first left wall 13 is provided with a first hole 132. The second heat dissipation left wall 81 is provided with a second hole 811. The seventh fastener 100g is connected to the first hole 132 and the second hole 811 to fix the second heat dissipation left wall 81 to the first left wall 13.

In some embodiments, the first left wall 13 is provided with a third connecting portion 133. The third connecting portion 133 is disposed between the first left wall 13 and the second heat dissipation left wall 81, and can fill the clearance between the first left wall 13 and the second heat dissipation left wall 81, thereby reducing the flow of the first insulation material to the clearance between the first left wall 13 and the second heat dissipation left wall 81. Optionally, the third connecting portion 133 includes foam. Optionally, a surface of the foam, which is connected to the first left wall 13 and the second heat dissipation left wall 81, contains glue, and can be bonded to the first left wall 13 and the second heat dissipation left wall 81. Optionally, the foam is compressed and disposed between the first left wall 13 and the second heat dissipation left wall 81, thereby strengthening the hermeticity of the clearance between the first left wall 13 and the second heat dissipation left wall 81. Optionally, the third connecting portion 133 includes a sealing adhesive.

In some embodiments, the second heat dissipation right wall 82 is connected to the first right wall 14. The battery module further includes an eighth fastener 100h. The first right wall 14 is provided with a third hole 142. The second heat dissipation right wall 82 is provided with a fourth hole 821. The eighth fastener 100h is connected to the third hole 142 and the fourth hole 821 to fix the second heat dissipation right wall 82 to the first right wall 14.

In some embodiments, the first right wall 14 is provided with a fourth connecting portion (not shown in the figures). The fourth connecting portion is disposed between the first right wall 14 and the second heat dissipation right wall 82, and can fill the clearance between the first right wall 14 and the second heat dissipation right wall 82, thereby reducing the flow of the first insulation material to the clearance between the first right wall 14 and the second heat dissipation right wall 82. Optionally, the fourth connecting portion includes foam. Optionally, a surface of the foam, which is connected to the first right wall 14 and the second heat dissipation right wall 82, contains glue, and can be bonded to the first right wall 14 and the second heat dissipation right wall 82. Optionally, the foam is compressed and disposed between the first right wall 14 and the second heat dissipation right wall 82, thereby strengthening the hermeticity of the clearance between the first right wall 14 and the second heat dissipation right wall 82. Optionally, the fourth connecting portion includes a sealing adhesive.

In some embodiments, the second heat dissipation element 80 includes a second heat dissipation bottom wall 85 and a second heat dissipation top wall 86 arranged along the second direction Y. The second heat dissipation bottom wall 85 is connected to the first member 60 by the first insulation piece 70.

In some embodiments, the first heat dissipation element 30 includes a protrusion 32. The protrusion 32 extends from the base portion 31. The protrusion 32 is fixedly connected to the second heat dissipation element 80. The protrusion 32 and the cell housing 211 are spaced apart from each other, thereby reducing interference with the cell housing 211 caused by the protrusion 32, and reducing the risk that the protrusion 32 damages the cell housing 211 and results in a short circuit. When the battery module 100 is subjected to an external force, the protrusion 32 can transfer the force to the second heat dissipation element 80, thereby improving protection for the battery cell 21.

In some embodiments, the protrusion 32 extends beyond the electrode terminals 212 along the second direction Y, thereby facilitating connection with the second heat dissipation element 80.

In some embodiments, the protrusion 32 is disposed on the first heat dissipation top wall 316. The second heat dissipation front wall 83 is provided with a third recess 832. The protrusion 32 is fixed to the third recess 832, thereby increasing the connection strength between the first heat dissipation element 30 and the second heat dissipation element 80.

In some embodiments, the battery module further includes a sixth fastener 100f. The protrusion 32 is provided with a seventh connecting hole 321. The third recess 832 is provided with an eighth connecting hole 8321. The sixth fastener 100f is connected to the seventh connecting hole 321 and the eighth connecting hole 8321 to fix the protrusion 32 to the third recess 832.

In some embodiments, the first heat dissipation element 30 includes two protrusions 32 arranged along the third direction Z. The two protrusions 32 are spaced apart from each other on the first heat dissipation top wall 316. The second heat dissipation rear wall 84 is provided with a fourth recess 842. One of the protrusions 32 is fixed to the third recess 832, and the other protrusion 32 is fixed to the fourth recess 842, thereby further increasing the connection strength between the first heat dissipation element 30 and the second heat dissipation element 80.

In some embodiments, the first heat dissipation top wall 316 does not extend beyond the first circuit board 40 along the second direction Y. The first heat dissipation top wall 316 and the first circuit board 40 are spaced apart from each other along the second direction Y, thereby facilitating assembling of the first circuit board 40.

In some embodiments, the second heat dissipation element 80 is provided with a fifth hole 87. The fifth hole 87 runs through the second heat dissipation bottom wall 85 and the second heat dissipation top wall 86. The wire 110b and the second connecting portion 110c extend out from the fifth hole 87, so that the second connecting portion 110c is connected to the second circuit board 50.

In some embodiments, the second heat dissipation element 80 is provided with a first notch 88, and the second limiting portion 62 is disposed in the first notch 88. The first notch 88 simplifies the structure of the second heat dissipation element 80 and reduces the weight of the second heat dissipation element 80. The first electrical connecting piece 120 is connected to the second circuit board 50 through the first notch 88.

In some embodiments, the second heat dissipation element 80 is provided with a second notch 89, and the third limiting portion 63 is disposed in the second notch 89. The second notch 89 simplifies the structure of the second heat dissipation element 80 and further reduces the weight of the second heat dissipation element 80. The second electrical connecting piece 130 is connected to the second circuit board 50 through the second notch 89.

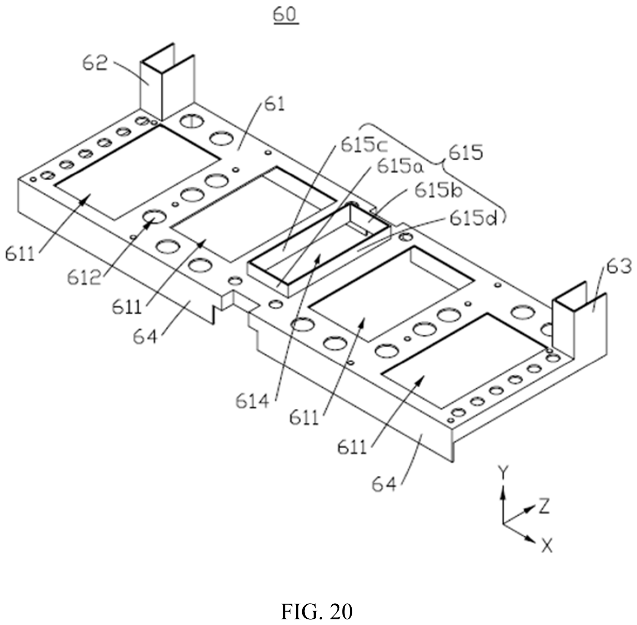

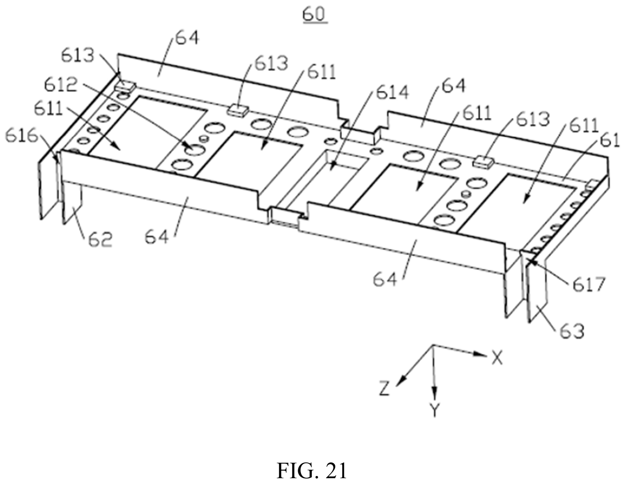

Referring to FIG. 1, FIG. 16, FIG. 18, FIG. 20, and FIG. 21, in some embodiments, the outer surface of the first member 60 is provided with an insulation material. Optionally, the first member 60 is made of an insulation material. Optionally, the first member 60 is made of a metal material and an insulation material. The insulation material may cover the outer surface of the metal material. The first member 60 includes a connecting body 61. The connecting body 61 is disposed on a side of the first circuit board 40, the side of the first circuit board 40 being a side facing away from the cell housing 211.

In some embodiments, the connecting body 61 is provided with a fifth opening 611. The fifth opening 611 runs through the connecting body 61. A projection of at least a part of the connection region 212a located within a projection of the fifth opening 611 along the second direction Y. The battery module 100 includes a second thermally conductive piece 106. The second thermally conductive piece 106 is disposed in the fifth opening 611. Along the second direction Y, one side of the second thermally conductive piece 106 is connected to the connection region 212a, and the other side of the second thermally conductive piece is connected to a second heat dissipation bottom wall 85 of the second heat dissipation element 80. Heat of the electrode terminals 212 can be transferred to the second heat dissipation element 80 through the second thermally conductive piece 106 and dissipated through the second heat dissipation channel, thereby improving the heat dissipation efficiency.

In some embodiments, the connecting body 61 is provided with a sixth opening 612. The sixth opening 612 runs through the connecting body 61. The first insulation material flows into the clearance between the connecting body 61 and the second heat dissipation bottom wall 85 through the sixth opening 612, thereby facilitating bonding of the connecting body 61 to the second heat dissipation bottom wall 85.

In some embodiments, a connecting protrusion 613 is disposed on a side of the connecting body 61, the side of the connecting body 61 being a side facing the first circuit board 40. The connecting protrusion 613 is connected to the first circuit board 40, such that a clearance is formed between the first circuit board 40 and the connecting body 61. The connection region 212a is located within the clearance, thereby making it convenient for the first insulation material to flow into the clearance to cover the connection region 212a and insulate and protect the connection region 212a, and facilitating bonding of the first circuit board 40 to the connecting body 61.

In some embodiments, the connecting body 61 is provided with a seventh opening 614. The seventh opening 614 runs through the connecting body 61. The wire 110b and the second connecting portion 110c are led out of the seventh opening 614 and extend out from the fifth hole 87 so as to be connected to an external device.

In some embodiments, the connecting body 61 is provided with a first limiting portion 615. The first limiting portion 615 is disposed on a side of the connecting body 61, the side of the connecting body 61 being a side facing away from the first circuit board 40. Along the second direction Y, a projection of the seventh opening 614 located within a projection of the first limiting portion 615. The first limiting portion 615 is disposed in the fifth hole 87, thereby making it convenient to locate the mounting positions of the second heat dissipation element 80 and the first member 60.

In some embodiments, when viewed along a direction opposite to the second direction Y, the first limiting portion 615 surrounds the first connecting portion 110a. The first insulation piece 70 is disposed on the first limiting portion 615 and covers at least the junction between the first connecting portion 110a and the first circuit board 40, thereby insulating and protecting the junction between the first connecting portion 110a and the first circuit board 40. The first limiting portion 615 may be any structure that surrounds the first connecting portion 110a, for example, may be a cylindrical structure, an elliptical cylindrical structure, a regular prism structure, or an irregular columnar structure. The regular prism structure may be a triangular prism, a quadrangular prism, a pentagonal prism, or the like.

In some embodiments, the first limiting portion 615 includes a first connecting wall 615a, a second connecting wall 615b, a third connecting wall 615c, and a fourth connecting wall 615d. The first connecting wall 615a and the second connecting wall 615b are disposed along the third direction Z. The third connecting wall 615c and the fourth connecting wall 615d are disposed along the first direction X. The first connecting wall 615a connects the third connecting wall 615c and the fourth connecting wall 615d. The second connecting wall 615b connects the third connecting wall 615c and the fourth connecting wall 615d. The first connecting wall 615a, the second connecting wall 615b, the third connecting wall 615c, and the fourth connecting wall 615d are connected to the connecting body 61.

In some embodiments, the connecting body 61 is provided with an eighth opening 616. The eighth opening 616 runs through the connecting body 61. The first electrical connecting piece 120 is connected to an external device through the eighth opening 616 and the first notch 88.

In some embodiments, the first member 60 includes a second limiting portion 62. The second limiting portion 62 is connected to one side of the connecting body 61, the side of the connecting body 61 facing away from the first circuit board 40. Along the second direction Y, a projection of the eighth opening 616 located within a projection of the second limiting portion 62. A part of a first electrical connecting piece 120 is disposed at the second limiting portion 62, so that the first electrical connecting piece 120 can be insulated and protected. Optionally, the first electrically conductive portion 120a is located at the second limiting portion 62. Optionally, the first electrically conductive portion 120a and a part of the first insulation portion 120b are located at the second limiting portion 62.

In some embodiments, the connecting body 61 is provided with a ninth opening 617. The ninth opening 617 runs through the connecting body 61. The second electrical connecting piece 130 is connected to an external device through the ninth opening 617 and the second notch 89.

In some embodiments, the first member 60 includes a third limiting portion 63. The third limiting portion 63 is connected to a side of the connecting body 61, the side of the connecting body 61 being a side facing away from the first circuit board 40. Along the second direction Y, a projection of the ninth opening 617 located within a projection of the third limiting portion 63. A part of a second electrical connecting piece 130 is disposed at the third limiting portion 63, so that the second electrical connecting piece 130 can be insulated and protected. Optionally, the second electrically conductive portion 130a is located at the third limiting portion 63. Optionally, the second electrically conductive portion 130a and a part of the second insulation portion 130b are located at the third limiting portion 63.

In some embodiments, the first member 60 includes an extension portion 64. The extension portion 64 is formed by extending an edge of the connecting body 61 along a direction perpendicular to the connecting body 61. Optionally, along the third direction Z, the projection of the first circuit board 40 located within the projection of the extension portion 64, thereby insulating and protecting the first circuit board 40. Optionally, along the third direction Z, the projection of an electrode terminal 212 located within the projection of the extension portion 64, thereby insulating and protecting the electrode terminal 212. Optionally, along the third direction Z, the projection of the first sealing portion 2115 located within the projection of the extension portion 64, thereby further insulating and protecting the electrode terminal 212.

In some embodiments, the battery module further includes a second insulation piece 90. The second insulation piece 90 is configured to be formed by curing a second insulation material.

In some embodiments, the second insulation piece 90 is at least partially disposed in the fifth hole 87 and covers at least a part of the wire 110b located in the fifth hole 87. The second insulation piece 90 is connected to the first insulation piece 70 to insulate and protect the first circuit board 40 and the first connecting portion 110a.

In some embodiments, the second insulation piece 90 protrudes beyond the second heat dissipation top wall 86, thereby reducing the entry of liquid from the fifth hole 87, and further insulating and protecting the first circuit board 40 and the first connecting portion 110a.

In some embodiments, the second insulation material includes at least one of a polyurethane adhesive, an epoxy adhesive, or a silicone adhesive. Optionally, the second insulation material includes a quick-drying adhesive.

In some embodiments, the battery module further includes a third insulation piece 91. The third insulation piece 91 is configured to be formed by curing a third insulation material.

In some embodiments, the third insulation piece 91 is at least partially disposed at the second limiting portion 62 and covers at least a part of the first electrical connecting piece 120, thereby further insulating and protecting the first electrical connecting piece 120.

In some embodiments, the third insulation material includes at least one of a polyurethane adhesive, an epoxy adhesive, or a silicone adhesive. Optionally, the third insulation material includes a quick-drying adhesive.

In some embodiments, the battery module further includes a fourth insulation piece 92. The fourth insulation piece 92 is configured to be formed by curing a fourth insulation material.

In some embodiments, the fourth insulation piece 92 is at least partially disposed at the third limiting portion 63 and covers at least a part of the second electrical connecting piece 130, thereby further insulating and protecting the second electrical connecting piece 130.

In some embodiments, the fourth insulation material includes at least one of a polyurethane adhesive, an epoxy adhesive, or a silicone adhesive. Optionally, the fourth insulation material includes a quick-drying adhesive.

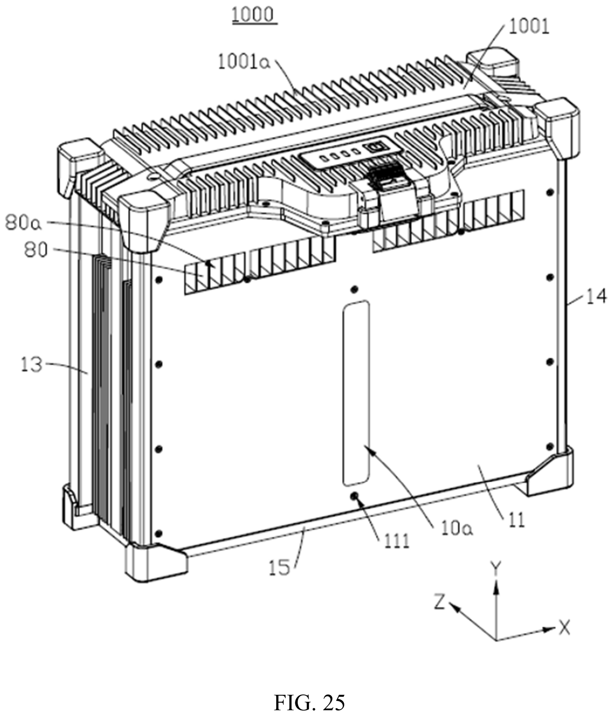

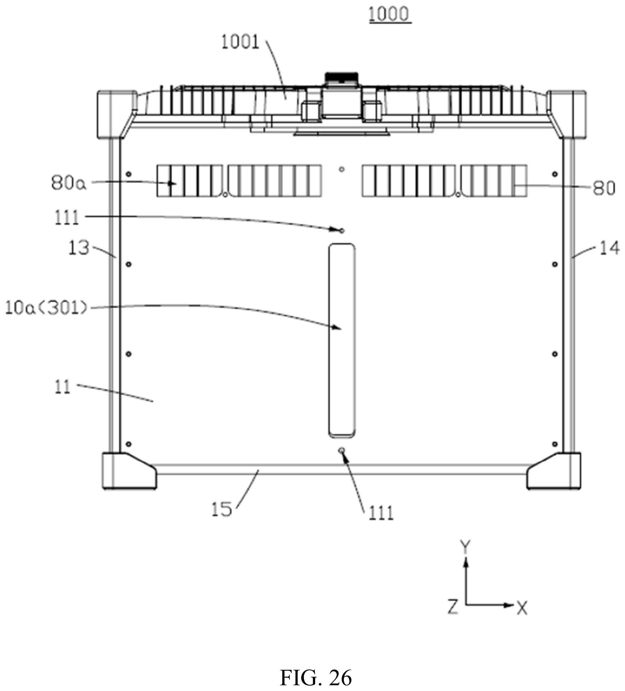

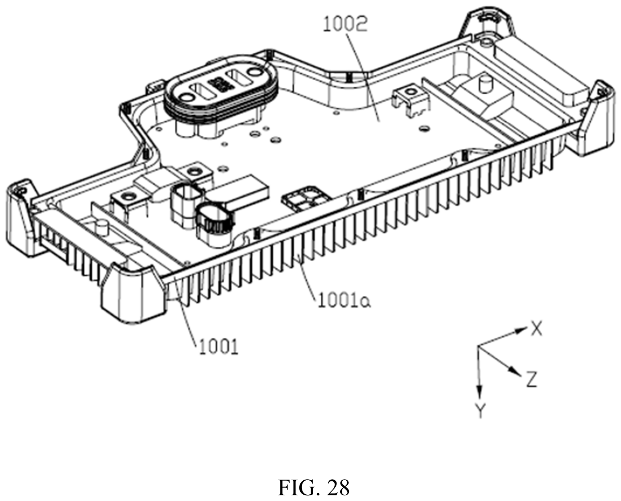

Referring to FIG. 25 to FIG. 28, another embodiment of this application provides a battery pack 1000 containing the battery module 100. The battery pack 1000 includes a top cover 1001 and a second circuit board 1002. The top cover 1001 is connected to the shell 10, and the second circuit board 1002 is connected to the cell assembly 20.

In some embodiments, the first bottom wall 15 and the top cover 1001 are arranged along the second direction Y.

In some embodiments, the battery pack 1000 includes a bracket 1003. The bracket 1003 is connected to the first front wall 11, the first rear wall 12, the first left wall 13, and the first right wall 14. The bracket 1003 and the top cover 1001 are arranged along the second direction Y. The top cover 1001 is connected to the bracket 1003.

In some embodiments, the top cover 1001 is provided with a third heat sink 1001a to facilitate heat dissipation.

In some embodiments, the top cover 1001 includes a thermally conductive material to improve the heat dissipation performance. Optionally, the top cover 1001 includes a thermally conductive metal material and a thermally conductive insulation material. The insulation material may cover the outer surface of the thermally conductive metal material. Optionally, the thermally conductive metal material includes aluminum.

In some embodiments, the second circuit board 1002 is connected to the top cover 1001. The second connecting portion 110c is connected to the second circuit board 1002. An acquisition assembly 110 can transmit the acquired information to the second circuit board 1002.

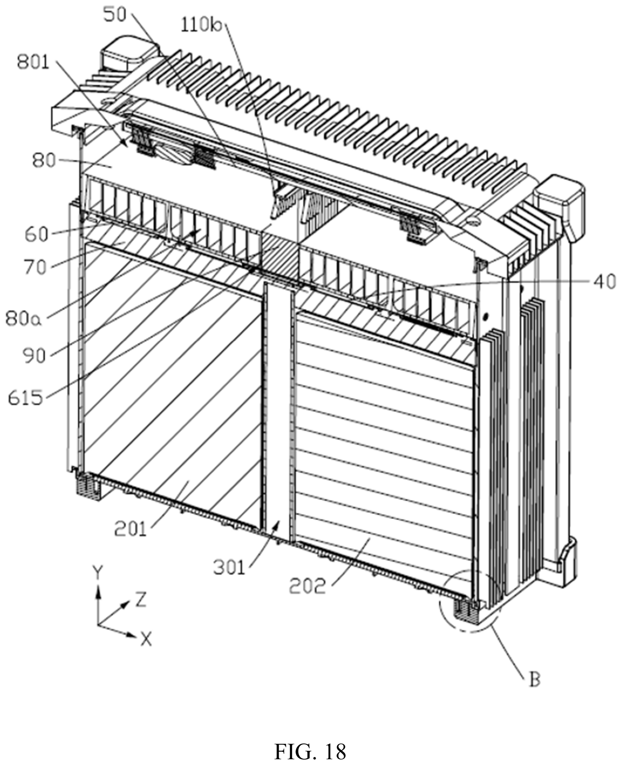

In some embodiments, a second space 801 (as shown in FIG. 18) is defined between the second heat dissipation top wall 86 and the top cover 1001. The second circuit board 1002 is located in the second space 801. The second heat dissipation element 80 can dissipate heat for the second circuit board 1002.

Optionally, the second circuit board 1002 includes a BMS assembly (Battery Management System). The BMS assembly includes a plurality of electronic components. The plurality of electronic components can implement functions such as control, protection, communication, SOC calculation, signal transmission, and power transmission for the battery cell 21.

Optionally, the second circuit board 1002 includes a flexible circuit board (FPC, Flexible Printed Circuit). Optionally, the second circuit board 1002 includes a printed circuit board (PCB, Printed Circuit Board). The second circuit board 1002 is populated with a plurality of traces (not shown in the drawing).

During assembling of the battery pack 1000, the cell assembly 20, the first heat dissipation element 30, the first circuit board 40, the first member 60, and the second heat dissipation element 80 are mounted in a space formed by the first left wall 13, first right wall 14, first front wall 11, and first rear wall 12 first. Subsequently, the second insulation material is disposed in the fifth hole 87, the third insulation material is disposed at the second limiting portion 62, and the third insulation material is disposed at the third limiting portion 63 to cure the second, third, and fourth insulation materials. Subsequently, the battery module 100 is inverted, and the first insulation material is disposed in the first space 601 through the first channel 302. The second circuit board 1002, the top cover 1001, the bracket 1003, and the first bottom wall 15 are mounted after the first insulation material is cured.

The second insulation piece 90 can restrict the first insulation material from overflowing out of the fifth hole 87. The third insulation piece 91 can restrict the first insulation material from overflowing out of the second limiting portion 62. The fourth insulation piece 92 can restrict the first insulation material from overflowing out of the third limiting portion 63.

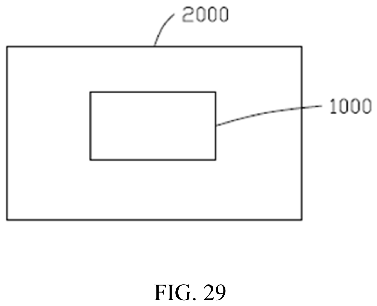

Referring to FIG. 29, this application further provides an electrical device 2000 that employs the battery pack 1000. In an embodiment, the electrical device 2000 of this application may be, but is not limited to, an electronic device, an unmanned aerial vehicle, a backup power supply, an electric vehicle, an electric motorcycle, an electric power-assisted bicycle, an electric tool, a large household battery module, or the like.

A person of ordinary skill in the art understands that the foregoing embodiments are merely intended to illustrate this application, but not to limit this application. All appropriate modifications and changes made to some embodiments without departing from the essence of this application still fall within the protection scope of this application.

## Claims

1. A battery module, comprising:
a shell;
a cell assembly disposed in the shell, the cell assembly comprises a plurality of battery cells, each of the battery cells comprises a cell housing and electrode terminals extending out of the cell housing; and
a first heat dissipation element provided with a first heat dissipation channel, wherein the first heat dissipation channel communicates with the outside, the first heat dissipation element is provided with a first heat dissipation recess, the first heat dissipation recess accommodates the cell housing of at least one of the plurality of battery cells, and a part of the cell housing of each battery cell is disposed in the first heat dissipation recess.

2. The battery module according to claim 1, wherein the first heat dissipation element is provided with a plurality of first heat dissipation recesses, and each of the first heat dissipation recesses accommodates a part of one cell housing.

3. The battery module according to claim 1 or 2, wherein each battery cell comprises an electrode assembly, the cell housing comprises a main portion and a first sealing portion, the electrode assembly is disposed in the main portion, and the electrode terminals extend out of the cell housing from the first sealing portion; and
a part of the main portion and a part of the first sealing portion are disposed in the first heat dissipation recess.

4. The battery module according to claim 3, wherein the cell housing further comprises a second sealing portion, the second sealing portion is disposed in the first heat dissipation recess, the second sealing portion is connected to the main portion, and the second sealing portion is located between the main portion and the first heat dissipation recess.

5. The battery module according to claim 4, wherein the battery module further comprises a first adhesive, the second sealing portion and the main portion are connected to the first heat dissipation recess by the first adhesive.

6. The battery module according to any one of claims 3 to 5, wherein the shell comprises a first bottom wall, and the first heat dissipation element is connected to the first bottom wall;
the cell housing comprises a bent portion, and the bent portion extends beyond the main portion; and
the battery module further comprises a third adhesive, the third adhesive is disposed between the cell housing and the first bottom wall, and the third adhesive covers the bent portion.

7. The battery module according to any one of claims 1 to 6, wherein the shell comprises a first shell opening and a second shell opening; and
the first heat dissipation channel communicates with the first shell opening and the second shell opening.

8. The battery module according to claim 7, wherein the first heat dissipation element comprises a first heat dissipation front wall and a first heat dissipation rear wall; and
the first heat dissipation channel runs through the first heat dissipation front wall and the first heat dissipation rear wall, and the first heat dissipation front wall and the first heat dissipation rear wall are connected to the shell.

9. The battery module according to any one of claims 1 to 8, wherein the cell assembly a first cell assembly and a second cell assembly, the first cell assembly comprises at least a plurality of the battery cells, and the second cell assembly comprises at least a plurality of the battery cells;
the first heat dissipation element is disposed between the first cell assembly and the second cell assembly, the first heat dissipation recess accommodates the cell housing of at least one first cell assembly, and a part of each cell housing is disposed in the first heat dissipation recess; and
the first heat dissipation element is further provided with a second heat dissipation recess, the second heat dissipation recess accommodates the cell housing of at least one second cell assembly, and a part of each cell housing is disposed in the second heat dissipation recess.

10. The battery module according to claim 9, wherein the first heat dissipation element is provided with a plurality of first heat dissipation recesses, and each of the first heat dissipation recesses accommodates a part of one cell housing; and
the first heat dissipation element is provided with a plurality of second heat dissipation recesses, and each of the second heat dissipation recesses accommodates a part of one cell housing.

11. The battery module according to claim 10, wherein the shell comprises a first left wall and a first right wall, and the first heat dissipation element is disposed between the first left wall and the first right wall;
the first left wall is provided with a first shell recess, the first shell recess accommodates the cell housing of at least one first cell assembly, and a part of each cell housing is disposed in the first shell recess; and
the first right wall is provided with a second shell recess, the second shell recess accommodates the cell housing of at least one second cell assembly, and a part of each cell housing is disposed in the second shell recess.

12. The battery module according to any one of claims 1 to 11, wherein the battery module further comprises a first circuit board, the first circuit board comprises a first opening and a second opening; among two adjacent battery cells, electrode terminals of one of the two adjacent battery cells pass through the first opening, and electrode terminals of the other of the two adjacent battery cells pass through the second opening and are connected to the electrode terminals of the one of the two adjacent battery cells in the first opening; and
the first heat dissipation element comprises a base portion, the first heat dissipation recess is disposed on the base portion, and the base portion and the first circuit board are spaced apart from each other along a second direction.

13. The battery module according to claim 12, wherein the first heat dissipation recess extends beyond the cell housing along the second direction.

14. The battery module according to any one of claims 1 to 13, wherein the battery module further comprises a second heat dissipation element, the second heat dissipation element is fixedly connected to the first heat dissipation element, and the second heat dissipation element is fixedly connected to the shell; and
the second heat dissipation element comprises a second heat dissipation channel, the shell comprises a third shell opening and a fourth shell opening, and the second heat dissipation channel is connected to the third shell opening and the fourth shell opening.

15. The battery module according to claim 14, wherein the first heat dissipation element comprises a protrusion, the protrusion and the cell housing are spaced apart from each other, and the protrusion is fixed to the second heat dissipation element.

16. The battery module according to claim 15, wherein the cell housing and the second heat dissipation element are arranged along a second direction, and the protrusion extends beyond the electrode terminals along the second direction.

17. A battery pack, comprising the battery module according to any one of claims 1 to 16, wherein the battery pack further comprises a top cover and a second circuit board, the second circuit board is connected to the cell assembly, and the top cover is connected to the shell.

18. An electrical device, wherein the electrical device comprises the battery pack according to claim 17.
